(19) Europäisches Patentamt
European Patent Office
Office européen des brevets

(11) **EP 3 001 593 B1**

(12) **EUROPEAN PATENT SPECIFICATION**

(45) Date of publication and mention
of the grant of the patent:
**21.11.2018 Bulletin 2018/47**

(51) Int Cl.:
*H04L 1/06* *(2006.01)*    *H04B 7/06* *(2006.01)*
*H04L 1/00* *(2006.01)*    *H04B 1/7107* *(2011.01)*
*H04L 25/02* *(2006.01)*

(21) Application number: **14814455.3**

(22) Date of filing: **03.06.2014**

(86) International application number:
**PCT/CN2014/079045**

(87) International publication number:
**WO 2014/201947 (24.12.2014 Gazette 2014/52)**

(54) **DATA RECEIVING METHOD AND APPARATUS**

DATENEMPFANGSVERFAHREN UND VORRICHTUNG

PROCÉDÉ ET APPAREIL DE RÉCEPTION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2013 CN 201310244772**

(43) Date of publication of application:
**30.03.2016 Bulletin 2016/13**

(73) Proprietor: **Huawei Technologies Co., Ltd.
Longgang District
Shenzhen, Guangdong 518129 (CN)**

(72) Inventors:
• **JIAO, Shurong
Shenzhen
Guangdong 518129 (CN)**

• **WU, Gengshi
Shenzhen
Guangdong 518129 (CN)**
• **TIE, Xiaolei
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(56) References cited:
**WO-A1-2010/098532    WO-A1-2011/128326
CN-A- 101 277 165    CN-A- 101 277 165
CN-A- 103 346 869    US-A1- 2009 225 889
US-A1- 2011 075 753    US-A1- 2011 268 019**

**Description**

**TECHNICAL FIELD**

The present invention relates to communications technologies, and in particular, to a data receiving method and apparatus.

**BACKGROUND**

With the continuous development of communications technologies, a multiple-input and multiple-output, MIMO, system is widely applied. Compared with a conventional single-antenna system, the MIMO system can greatly improve spectrum utilization, so that the system can transmit a data service with a higher rate in a limited wireless frequency band. That is, in the MIMO system, multiple transmit antennas and receive antennas are used at a transmit end and a receive end, respectively, and a signal is transmitted and received by using the multiple antennas at the transmit end and the receive end, thereby improving service quality for each user.

Specifically, in a four-branch MIMO system, a base station separately performs the following operations on four transport blocks (hereinafter referred to as TB for short) that are to be sent to a terminal, so as to form constellation point symbol streams: bit scrambling, code block segmentation, channel encoding, a physical layer hybrid automatic repeat request, HARQ, function operation, physical code channel allocation, high-speed downlink shared channel, HS-DSCH, interleaving, constellation point arrangement, channel mapping of physical code channels, and constellation point mapping. Interleaved data streams are obtained by performing inter-layer interleaving on the constellation point symbol streams, and spreading and scrambling, precoding, and summation of data of multi code channels are performed on the interleaved data streams, to finally generate signals corresponding to the transmit antennas. A specific inter-layer interleaving process is described in Table 1.

WO 2011/128326 A1 describes methods, receivers and computer program products for processing a signal transmitted from a plurality of spatially separated transmit antennas using a multiple-input multiple-output transmission over a wireless network. According to the therein described method, the signal is received at a plurality of spatially separated receive antennas, the signal comprising a plurality of data streams and the quality/reliability of each of the data streams in the received signal is determined.

US 2011/268019 A1 describes systems and methods for using a joint decoding engine in a wireless device. According to the therein described method, a first symbol stream and a second symbol stream in a received multiple input multiple output, MIMO, signal is determined. A scaled channel estimate for a wireless transmission channel and a scaled noise covariance of the MIMO signal are also determined.

US 2011/075753 A1 describes a method and an apparatus for transmitting at least two transport blocks in a Multi-Input Multi-Output, MIMO, communication system, in which a transmitter determines whether a type of a receiver receiving the at least two transport blocks is a Successive Interference Cancellation, SIC, receiver, determines a Modulation and Coding Scheme, MCS, level for the at least two transport blocks depending on whether the type of the receiver is an SIC receiver, and transmits the at least two transport blocks using the determined MCS level.

CN 101 277 165 A describes a MIMO-MMSE-SIC-HARQ communications system.

Subsequently, the terminal receives the signals sent by the antennas of the base station, and further processes the received signals to obtain original transport blocks. However, in the prior art, accuracy of the terminal in receiving downlink data of a four-branch MIMO system is relatively low, and the base station needs to bear unnecessary load.

**SUMMARY**

Embodiments of the present invention provide a data receiving method and apparatus, which are used to resolve a problem in the prior art that accuracy of a terminal in receiving downlink data of a four-branch MIMO system is relatively low, and further reduce load of a base station.

A first embodiment of the present invention provides a data receiving method according to independent claim 1 and the corresponding receiving apparatus according to independent claim 9. Dependent claims depict further advantageous embodiments of the invention.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic flowchart of Embodiment 1 of a data receiving method according to the present invention;
FIG. 2 is a schematic diagram of an application structure of a data receiving method of a MIMO system according to the present invention;
FIG. 3 is a schematic structural diagram of Embodiment 1 of a data receiving apparatus according to the present invention; and
FIG. 4 is a schematic structural diagram of Embodiment 2 of a data receiving apparatus according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

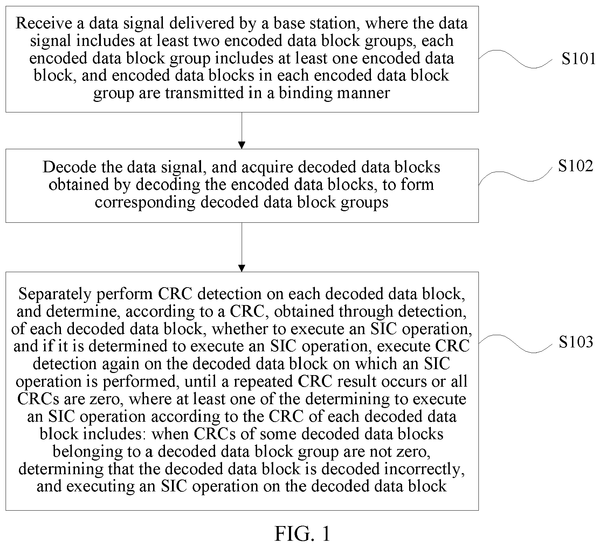

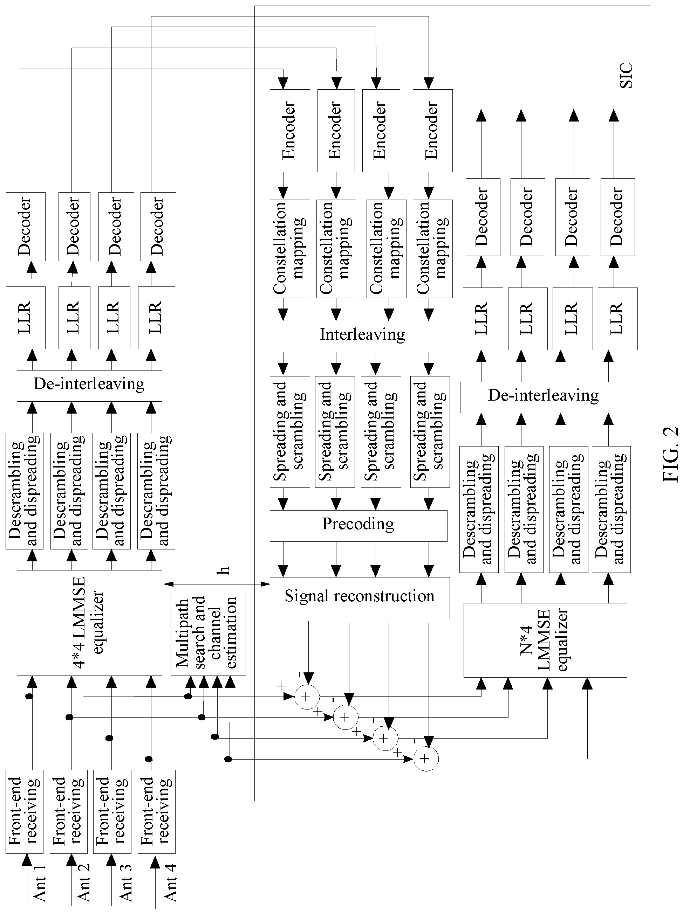

FIG. 1 is a schematic flowchart of Embodiment 1 of a data receiving method according to the present invention, and FIG. 2 is a schematic diagram of an application structure of a data receiving method of a MIMO system according to the present invention. The method of this embodiment is executed by a data receiving apparatus, and the apparatus may be integrated in a terminal. The method of this embodiment includes the following steps:

S101: Receive a data signal delivered by a base station, where the data signal includes at least two encoded data block groups, each encoded data block group includes at least one encoded data block, and encoded data blocks in each encoded data block group are transmitted in a binding manner.

S102: Decode the data signal, and acquire decoded data blocks obtained by decoding the encoded data blocks, to form corresponding decoded data block groups.

Specifically, the terminal receives, from an antenna end, a data signal delivered by a base station, where the data signal carries at least two encoded data block groups, each encoded data block group includes at least one encoded data block, and quantities of encoded data blocks in the encoded data block groups may be equal or may not be equal, which is not limited in the present invention. Encoded data blocks in each encoded data block group are transmitted in a binding manner, and each encoded data block has corresponding bit information (that encoded data blocks are transmitted in a binding manner herein actually refers that bit information on multiple encoded data blocks in an encoded data block group are transmitted together). As shown in FIG. 2, when the terminal receives the data signal delivered by the base station, a bit stream of the data signal enters a 4*4 linear minimum mean square error (Linear Minimum Mean Square Error, hereinafter referred to as LMMSE for short) equalizer for equalization, so as to remove interference from a receive end signal, so that a back end can better restore the originally sent signal; and then, the data signal on which equalization processing is performed enters a descrambling and despreading module and a de-interleaving module to be descrambled and despread and de-interleaved. Before the data signal is sent from a base station side, scrambling and spreading processing and inter-layer interleaving processing are performed on the data signal to avoid that a receive end cannot correctly restore the data signal because the data signal is interfered in a transmission process. Herein, the inter-layer interleaving is also used to avoid an occurrence of an error of consecutive "1s" or "0s" in bit information, and the interleaving is used to disperse and distribute these consecutive bits into the bit stream, so that the inter-layer de-interleaving can better restore the original data signal subsequently. A manner in which inter-layer interleaving is performed on the data signal is described in Table 1.1 (the inter-layer interleaving manner in Table 1.1 is described by using an example in which the terminal acquires four encoded data blocks). Therefore, corresponding descrambling and despreading processing and inter-layer de-interleaving processing need to be performed on the data signal on which equalization processing is performed, where the inter-layer de-interleaving manner is described in Table 1.2 (the inter-layer de-interleaving manner in Table 1.2 is described by using an example in which the terminal acquires four encoded data blocks), and an operation of performing inter-layer de-interleaving on received data is based on quantity information of encoded data blocks in a high speed shared control channel (High Speed Shared Control Channel, hereinafter referred to as HS-SCCH for short). FIG. 2 shows a structure of four decoders, but in an actual application, a quantity of actually working decoders is equal to a quantity of currently transmitted encoded data blocks, and the quantity of the currently transmitted encoded data blocks is determined by the base station according to channel state information (Channel State Information, hereinafter referred to as CSI for short) reported by the terminal, where the CSI includes a rank indicator (Rank Indicator, hereinafter referred to as RI for short), a precoding indicator (Precoding Indicator, hereinafter referred to as PCI for short), and a channel quality indicator (Channel Quality Indicator, hereinafter referred to as CQI for short); and in a four-branch MIMO system, the actual quantity of encoded data blocks is an integer ranging from 1 to 4. Further, the data signal on which the foregoing processing is performed enters a log-likelihood ratio (Log-Likelihood Ratio, hereinafter referred to as LLR for short) module and a decoder for further decoding processing, to acquire decoded data blocks obtained by decoding multiple encoded data blocks.

**Table 1.1**

| Quantity of transport blocks | Inter-layer interleaving output |
|---|---|
| 1 | $x^{(0)}(i) = d^{(0)}(i)$ |
| 2 | $x^{(0)}(i) = d^{(0)}(i)$ <br> $x^{(1)}(i) = d^{(1)}(i)$ |
| 3 | $x^{(0)}(i) = d^{(0)}(i)$ <br><br> $x^{(1)}(i) = \begin{cases} d^{(1)}(i), & i \text{ is odd} \\ d^{(2)}(i), & i \text{ is even} \end{cases}$ <br><br> $x^{(2)}(i) = \begin{cases} d^{(2)}(i), & i \text{ is odd} \\ d^{(1)}(i), & i \text{ is even} \end{cases}$ |
| 4 | $x^{(0)}(i) = \begin{cases} d^{(0)}(i), & i \text{ is odd} \\ d^{(3)}(i), & i \text{ is even} \end{cases}$ <br><br> $x^{(3)}(i) = \begin{cases} d^{(3)}(i), & i \text{ is odd} \\ d^{(0)}(i), & i \text{ is even} \end{cases}$ <br><br> $x^{(1)}(i) = \begin{cases} d^{(1)}(i), & i \text{ is odd} \\ d^{(2)}(i), & i \text{ is even} \end{cases}$ <br><br> $x^{(2)}(i) = \begin{cases} d^{(2)}(i), & i \text{ is odd} \\ d^{(1)}(i), & i \text{ is even} \end{cases}$ |

**Table 1.2**

| Quantity of transport blocks | Inter-layer interleaving output |
|---|---|
| 1 | $d^{(0)}(i) = x^{(0)}(i)$ |
| 2 | $d^{(0)}(i) = x^{(0)}(i)$ <br> $d^{(1)}(i) = x^{(1)}(i)$ |
| 3 | $d^{(0)}(i) = x^{(0)}(i)$ <br><br> $d^{(1)}(i) = \begin{cases} x^{(1)}(i), & i \text{ is odd} \\ x^{(2)}(i), & i \text{ is even} \end{cases}$ <br><br> $d^{(2)}(i) = \begin{cases} x^{(2)}(i), & i \text{ is odd} \\ x^{(1)}(i), & i \text{ is even} \end{cases}$ |

(continued)

| Quantity of transport blocks | Inter-layer interleaving output |
|---|---|
| 4 | $d^{(0)}(i) = \begin{cases} x^{(0)}(i), & i \ is \ odd \\ x^{(3)}(i), & i \ is \ even \end{cases}$ <br><br> $d^{(3)}(i) = \begin{cases} x^{(3)}(i), & i \ is \ odd \\ x^{(0)}(i), & i \ is \ even \end{cases}$ <br><br> $d^{(1)}(i) = \begin{cases} x^{(1)}(i), & i \ is \ odd \\ x^{(2)}(i), & i \ is \ even \end{cases}$ |
| | $d^{(2)}(i) = \begin{cases} x^{(2)}(i), & i \ is \ odd \\ x^{(1)}(i), & i \ is \ even \end{cases}$ |

S103: Separately perform cyclic redundancy check (Cyclic Redundancy Check, hereinafter referred to as CRC for short) detection on each decoded data block, and determine, according to a CRC, obtained through detection, of each decoded data block, whether to execute a successive interference cancellation (Successive Interference Cancellation, hereinafter referred to as SIC for short) operation, and if it is determined to execute an SIC operation, execute CRC detection again on the decoded data block on which an SIC operation is performed, until a same CRC result occurs or all CRCs are zero, where at least one of the determining to execute an SIC operation according to the CRC of each decoded data block includes: when CRCs of some decoded data blocks belonging to a decoded data block group are not zero, determining that the decoded data block is decoded incorrectly, and executing an SIC operation on the decoded data block.

Specifically, the terminal performs CRC detection on each acquired decoded data block by using a CRC detection mechanism of the terminal, and determines, according to a CRC of each decoded data block, whether to execute an SIC operation, and if it is determined to execute an SIC operation, executes CRC detection again on the decoded data block on which an SIC operation is performed, until a same CRC result occurs or all CRCs are zero, where at least one of the determining to execute an SIC operation according to the CRC of each decoded data block includes: when CRCs of some decoded data blocks belonging to a decoded data block group are not zero, determining that the decoded data block is decoded incorrectly, and executing an SIC operation on the decoded data block. Herein, for example, the terminal acquires two decoded data block groups from the received data signal, where one decoded data block group includes one decoded data block, and the other decoded data block group includes two decoded data blocks:

The terminal acquires two decoded data block groups from the received data signal, which are separately a first decoded data block group and a second decoded data block group, where the first decoded data block group includes a first decoded data block obtained by decoding a first encoded data block, and the second decoded data block group includes a second decoded data block obtained by decoding a second encoded data block and a third decoded data block obtained by decoding a third encoded data block. Assuming that the terminal detects, by using the CRC detection mechanism of the terminal, that a CRC of the first decoded data block in the first decoded data block group is zero, and neither a CRC of the second decoded data block in the second decoded data block group nor a CRC of the third decoded data block in the second decoded data block group is zero, the terminal determines to perform an SIC operation on the two decoded data blocks in the second decoded data block group, that is, performs signal reconstruction on the decoded data block in the first decoded data block group and then subtracts the first decoded data block from an original data signal, performs corresponding operations on the remaining two decoded data blocks in the second decoded data block group, and performs CRC detection again on the second decoded data block and the third decoded data block on which an SIC operation is performed for a first time. Generally, after the SIC operation is performed for the first time on the two decoded data blocks in the second decoded data block group, there exist three cases, which are separately as follows: (1) The CRCs of both the second decoded data block and the third decoded data block are zero; (2) Neither of the CRCs of the second decoded data block and the third decoded data block is zero; and (3) The CRC of one of the decoded data blocks in the second decoded data block group is not zero, and herein it is assumed that the CRC of the third decoded data block is not zero. For the foregoing first and second cases, the terminal no longer performs an SIC operation; if it is the foregoing third case, the terminal continues to perform an SIC operation for a second time on the third decoded data block, and performs CRC detection on the third decoded data block on which the SIC operation is performed for the second time. If after the SIC operation is performed for the second time, the CRC of the third decoded data block is still not zero, the terminal no longer performs an SIC operation; and if after the SIC operation is performed for the second time, the CRC of the third decoded data block is zero, the terminal determines that the third decoded data block is decoded correctly, and the downlink data is received successfully.

In the prior art, in a case that is the same as the foregoing case, that is, if a terminal acquires two decoded data block groups from the received data signal, which are separately: a first decoded data block group and a second decoded data block group, where the first decoded data block group includes a first decoded data block obtained by decoding a first encoded data block, and the second decoded data block group includes a second decoded data block obtained by decoding a second encoded data block and a third decoded data block obtained by decoding a third encoded data block, assuming that the terminal detects, by using a CRC detection mechanism of the terminal, that a CRC of the first decoded data block in the first decoded data block group is zero, and neither a CRC of the second decoded data block in the second decoded data block group nor a CRC of the third decoded data block in the second decoded data block group is zero, the terminal performs an SIC operation for a first time on the two decoded data blocks in the second decoded data block group, and performs CRC detection again on the two decoded data blocks on which the SIC operation is performed for the first time. There also exist three cases, which are separately as follows: (1) The CRCs of both the second decoded data block and the third decoded data block are zero; (2) Neither of the CRCs of the second decoded data block and the third decoded data block is zero; (3) The CRC of one of the decoded data blocks in the second decoded data block group is not zero. For the two cases in which the CRCs of both the second decoded data block and the third decoded data block are zero, and neither of the CRCs of the second decoded data block and the third decoded data block is zero, the terminal also no longer performs an SIC operation. However, for the case in which the CRC of one of the decoded data blocks in the second decoded data block group is not zero, the terminal still considers that both of the two decoded data blocks are decoded incorrectly, and no longer performs an SIC operation for a second time; and instead, directly reports a retransmission indication to the base station, so that the base station re-delivers a data signal, which undoubtedly brings unnecessary load to the base station, and decoding accuracy of the decoded data block is also not high. However, in the present invention, in the foregoing case (3) in which the CRC of one of the decoded data blocks in the second decoded data block group is not zero, the terminal still performs an SIC operation for a second time on the decoded data block whose CRC is not zero, thereby ensuring accuracy of further decoding of the decoded data block, and also lightening load of the base station.

In the method according to this embodiment of the present invention, a terminal receives a data signal delivered by a base station, acquires decoded data blocks from the data signal, performs CRC detection on each decoded data block, and determines, according to a CRC of each decoded data block, whether to execute an SIC operation, that is, when CRCs of some decoded data blocks belonging to a decoded data block group are not zero, the terminal performs an SIC operation at least once on the decoded data block whose CRC is not zero, and after performing the SIC operation, continues to perform CRC detection, until a same CRC result occurs or all CRCs are zero, thereby resolving a problem in the prior art that accuracy of the terminal in receiving downlink data is relatively low, and further reducing load of the base station.

In Embodiment 2 of the present invention, on a basis of the foregoing Embodiment 1, preferably, the determining, according to a CRC, obtained through detection, of each decoded data block, whether to execute an SIC operation includes: identifying whether CRCs of all decoded data blocks are zero; and when it is identified that the CRCs of all the decoded data blocks are all zero, determining that the decoded data blocks are decoded correctly, and skipping executing an SIC operation; or when it is identified that not all of the CRCs of the decoded data blocks are zero, identifying whether a CRC result of each decoded data block is the same as a previous CRC result; and if yes, determining that the decoded data block is decoded incorrectly, skipping executing an SIC operation, and reporting a retransmission indication to the base station, so that the base station resends a downlink data signal; or if no, determining that the decoded data block is decoded incorrectly, and executing an SIC operation

Specifically, after acquiring each decoded data block, the terminal identifies, by using the CRC detection mechanism, whether CRCs of all decoded data blocks are zero. When it is identified that the CRCs of all the decoded data blocks are all zero, the terminal determines that the decoded data blocks are decoded correctly, and receives downlink data successfully and skips executing an SIC operation. A process after the correct decoding may be executed according to the prior art. When it is identified that not all of the CRCs of the decoded data blocks are zero, the terminal identifies whether a CRC result of each decoded data block is the same as a previous CRC result; and when it is identified that the CRC result of each decoded data block is the same as the previous CRC result, determines that the decoded data block is decoded incorrectly, skips executing the SIC operation, and reports a retransmission indication to the base station, so that the base station resends a downlink data signal. For the example in the foregoing Embodiment 1, neither of the CRCs of the two decoded data blocks in the second decoded data block group on which decoding is performed is zero, if both the two CRCs are still not zero after the SIC operation is performed for the first time, the terminal determines that the decoded data blocks are decoded incorrectly, skips executing an SIC operation, and reports a retransmission indication to the base station, so that the base station resends a downlink data signal; or when it is identified that the CRC result of each decoded data block is not the same as the previous CRC result, the terminal determines that the decoded data block is decoded incorrectly, and executes an SIC operation. Herein, another example is used for description, that is, assuming that the terminal acquires, from the received data signal, two decoded data block groups, which are separately a first decoded data block group and a second decoded data block group, where the first decoded data block group includes two decoded data blocks obtained by decoding data blocks, which are separately: a first decoded data block and a fourth decoded data block, the second decoded data block group includes two decoded data blocks obtained by decoding data blocks, which are separately a second decoded data block and a third decoded data block, CRCs of the first decoded data block and the second decoded data block are zero, and CRCs of the fourth decoded data block and the third decoded data block are not zero. In the prior art, a terminal directly considers that neither of the CRCs of the decoded data blocks in the first decoded data block group and the second decoded data block group is zero, and skips executing an SIC operation; instead, the terminal directly reports a retransmission indication to the base station, so that the base station re-delivers a data signal. However, in the present invention, the terminal still performs an SIC operation on the decoded data blocks whose CRCs are not zero in the first decoded data block group and the second decoded data block group, thereby ensuring decoding accuracy, and further lightening load of the base station.

In Embodiment 3 of the present invention, on a basis of the foregoing Embodiment 2, preferably, the when it is identified that the CRC result of each decoded data block is not the same as the previous CRC result, determining that the decoded data block is decoded incorrectly, and executing an SIC operation includes: when the CRC result of each decoded data block is not the same as the previous CRC result, separately performing a signal reconstruction operation on a decoded data block whose CRC is zero, to acquire a reconstructed signal of each decoded data block; subtracting the reconstructed signal of each decoded data block from the received data signal, to acquire an original data signal corresponding to a decoded data block whose CRC is not zero; performing a decoding preparation operation on the acquired original data signal; and decoding the data signal on which the decoding preparation operation is performed, to obtain a decoded data block.

Specifically, after acquiring the decoded data blocks, the terminal performs CRC detection on these decoded data blocks, and when a CRC result of each decoded data block is not the same as the previous CRC result, separately performs a signal reconstruction operation on a decoded data block whose CRC is zero, to acquire a reconstructed signal of each decoded data block. In actual application, the terminal reconstructs only information bits in the decoded data block whose CRC is zero. Referring to the structure shown in FIG. 2, encoding, constellation mapping, inter-layer interleaving, spreading and scrambling, and precoding operations are performed on the information bits that correspond to the decoded data block, where the inter-layer interleaving manner is described in Table 1.1; then, the reconstructed signal of each decoded data block is subtracted from the received signal, where only an original data signal corresponding to the decoded data block whose CRC is not 0 is reserved, and a decoding preparation operation is performed on the acquired original data signal. It should be noted that, in FIG. 2, after the terminal executes the signal reconstruction operation, a signal of a transmit end of the base station is actually reconstructed, and then, in combination with channel quality obtained through multipath searching and channel estimation, an original data signal corresponding to the decoded data block whose CRC is zero is constructed, where h in FIG. 2 is a value of channel estimation, representing the channel quality. The decoding preparation operation includes: performing LMMSE equalization, descrambling and despreading, inter-layer de-interleaving, and LLR operations on the acquired original data signal. In FIG. 2, before the information bits of each decoded data block enter an input end of an interleaving module, the terminal sets a data stream corresponding to the decoded data block whose CRC is not 0 to 0, and then interleaves the decoded data block with the decoded data block whose CRC is zero in a corresponding decoded data block group.

Further, the LMMSE equalization in the decoding preparation operation uses n×4, where n is determined according to a quantity of data streams actually existing in the received signal. For example, if 4 encoded data blocks are received, and after demodulation and decoding are performed for a first time on the 4 encoded data blocks, two encoded data blocks are decoded correctly, that is, after the two encoded data blocks are decoded, two corresponding decoded data blocks are correct, a reconstructed signal corresponding to the two decoded data blocks is subtracted from the received signal, where only a signal corresponding to the other two decoded data blocks remains in the received signal, so that n is 2 herein, that is, 2×4 LMMSE equalization is used. Subsequently, descrambling and despreading, inter-layer de-interleaving, LLR, and decoding operations are performed on the decoded data blocks on which equalization processing is performed, to acquire correct downlink data, where the inter-layer de-interleaving manner is described in Table 1.2.

After the foregoing operations are completed, the data signal on which the decoding preparation operation is performed is decoded, to obtain a decoded data block.

In Embodiment 4 of the present invention, preferably, before the receiving a data signal delivered by a base station, the method further includes: separately acquiring physical channel quality corresponding to each encoded data block group, to determine an average CQI of each encoded data block group; and reporting the average CQI to the base station, so that the base station determines, according to the average CQI, a size of the encoded data block of the delivered data signal.

Specifically, before the terminal receives the data signal delivered by the base station, the terminal separately acquires physical channel quality corresponding to each encoded data block group. Generally, in a data transmission process, information bits of encoded data blocks in each encoded data block group are generally transmitted together in a mixed manner, and occupy multiple physical channels, that is, each physical channel may have information bits of multiple different encoded data blocks, and each physical channel is corresponding to one CQI. Therefore, during transmission, each encoded data block group is corresponding to multiple CQIs. After acquiring the multiple CQIs corresponding to each encoded data block group, the terminal performs an averaging calculation on the acquired CQIs, to determine an average CQI of each encoded data block group, where the averaging may be arithmetic averaging, or may be another averaging manner such as statistical averaging. In addition, another manner may also be used to determine an average CQI of each encoded data block group, that is, acquiring signal to noise ratios of multiple physical channels occupied by each encoded data block group, averaging the signal to noise ratios to obtain an average signal to noise ratio, and further determining an average CQI by using the average signal to noise ratio, where the averaging may be arithmetic averaging, or may be another averaging manner such as statistical averaging. Further, after determining the average CQI corresponding to each encoded data block group, the terminal reports the average CQI of each encoded data block group to the base station, and the base station learns, according to the average CQI reported by the terminal, the physical channel quality corresponding to the encoded data block group, and determines the size of the encoded data block delivered to the physical channels. Herein, two encoded data block groups are used as an example. The two encoded data block groups are separately a first encoded data block group and a second encoded data block group, where the first encoded data block group includes a first encoded data block and a fourth encoded data block, and the second encoded data block group includes a second encoded data block and a third encoded data block. After inter-layer interleaving is performed on the data signal at the base station side, the first encoded data block and the fourth encoded data block are evenly distributed on a first layer and a fourth layer (where the layer may be a physical channel, or may be another channel for transmitting these encoded data blocks, which is not limited herein), that is, the first layer carries both the first encoded data block and the fourth encoded data block, and the fourth layer carries both the fourth encoded data block and the first encoded data block. The second encoded data block and the third encoded data block are also evenly distributed on the second layer and the third layer. In this case, the terminal separately acquires a first CQI and a fourth CQI, and/or, a second CQI and a third CQI by using a detection mechanism of the terminal, where the first CQI is a CQI of the first layer, the second CQI is a CQI of the second layer, the third CQI is a CQI of the third layer, and the fourth CQI is a CQI of the fourth layer. A first average CQI is determined according to the first CQI and the fourth CQI, and a second average CQI is determined according to the second CQI and the third CQI. Then, the terminal reports the first average CQI and/or the second average CQI to the base station, so that the base station delivers a data signal according to the first average CQI and/or the second average CQI. Because the first average CQI reported by the terminal is relatively close to a CQI of a channel through which the first encoded data block and the fourth encoded data block actually pass, and/or, the second average CQI is relatively close to a channel through which the second encoded data block and the third encoded data block actually pass, when delivering the data signal according to the first average CQI and/or the second average CQI, the base station learns a situation of the channels through which the encoded data blocks actually pass, and further delivers a data signal adaptive to the size of the encoded data block. If the first average CQI and/or the second average CQI are/is not reported, herein assuming that the first average CQI is not reported, if a relatively small CQI is reported to the base station, but the CQI is greater than the fourth CQI of the fourth layer and less than the first CQI of the first layer, a probability that the fourth encoded data block is decoded incorrectly is relatively high. However, the first layer may originally decode a larger encoded data block, but because the base station delivers data according to the smaller CQI, the first layer is not fully used, so that the base station does not deliver the data signal according to an actual channel situation, so that a capability of the terminal in receiving data is not adaptive to an amount of data delivered by the base station, thereby reducing a throughput for a user.

In the method according to this embodiment, the terminal reports an average CQI, so that the base station delivers data of an adaptive size to the terminal according to the average CQI, so that resources are fully utilized, thereby further improving a throughput for a user.

To make the technical solutions of the embodiments of the present invention clearer, herein, two decoded data block groups are used as an example. Preferably, the decoding the data signal, and acquiring decoded data blocks includes: decoding the data signal, and acquiring a first decoded data block group and a second decoded data block group, where the first decoded data block group includes: a first decoded data block and a fourth decoded data block, and the second decoded data block group includes: a second decoded data block and a third decoded data block, where the first decoded data block and the fourth decoded data block are transmitted in a binding manner, and the second decoded data block and the third decoded data block are transmitted in a binding manner.

In Embodiment 5 of the present invention, on a basis of the foregoing embodiment, preferably, the separately performing CRC detection on each decoded data block, and determining, according to a CRC, obtained through detection,

of each decoded data block, whether to execute a successive interference cancellation SIC operation, and if it is determined to execute an SIC operation, executing CRC detection again on the decoded data block on which an SIC operation is performed, until a same CRC result occurs or all CRCs are zero includes: separately performing CRC detection on each decoded data block, to acquire the CRC of each decoded data block; when it is identified that the first decoded data block group and the second decoded data block group each include a decoded data block whose CRC is not 0, performing an SIC operation for a first time on the decoded data blocks whose CRCs are not 0 in the first decoded data block group and the second decoded data block group; performing CRC detection on the decoded data blocks on which the SIC operation is executed for the first time; and if the CRCs of the decoded data blocks whose CRCs are not 0 in the first decoded data block group and the second decoded data block group are both 0 after undergoing the SIC operation for the first time, determining that the decoded data blocks are decoded correctly, and no longer executing an SIC operation; if neither of the CRCs of the decoded data blocks on which the SIC operation is executed for the first time is 0, determining that the decoded data blocks are decoded incorrectly, no longer executing an SIC operation, and reporting a retransmission indication to the base station, so that the base station resends a downlink data signal; or if the CRC of one of the decoded data blocks on which the SIC operation is executed for the first time is not 0, determining that the decoded data block is decoded incorrectly, and executing an SIC operation for a second time on the decoded data block whose CRC is not 0; performing CRC detection on the decoded data block on which the SIC operation is executed for the second time; and if the CRC of the decoded data block on which the SIC operation is executed for the second time is 0, determining that the decoded data block is decoded correctly, and no longer executing an SIC operation; and if the CRC of the decoded data block on which the SIC operation is executed for the second time is not 0, determining that the decoded data block is decoded incorrectly, no longer executing an SIC operation, and reporting a retransmission indication to the base station, so that the base station resends a downlink data signal.

Specifically, the terminal detects, by using the CRC detection mechanism of the terminal, CRCs of the decoded data blocks in the first decoded data block group and the second decoded data block group, to acquire the CRC of each decoded data block, and determines whether the CRC of each decoded data block is 0. When it is identified that the first decoded data block group and the second decoded data block group each include a decoded data block whose CRC is not 0, that is, the first decoded data block group and the second decoded data block group each include a decoded data block that is decoded incorrectly, the terminal performs an SIC operation for a first time on the decoded data blocks whose CRCs are not 0 in the first decoded data block group and the second decoded data block group. That is, herein, assuming that in the first decoded data block group, a CRC of the first decoded data block is 0 and a CRC of the fourth decoded data block is not 0, and that in the second decoded data block group, a CRC of the second decoded data block is 0, and a CRC of the third decoded data block group is not 0, in this case, the terminal performs a signal reconstruction operation on the first decoded data block and the second decoded data block, that is, performs encoding, constellation mapping processing, inter-layer interleaving, spreading and scrambling, and precoding operations on the first decoded data block and the second decoded data block, to construct a reconstructed signal (the inter-layer interleaving manner is described in Table 1.1), and before the four decoded data blocks enter the input end of the interleaving module shown in FIG. 2, the terminal further sets data streams of the fourth decoded data block and the third decoded data block to 0, so that the terminal can perform corresponding inter-layer interleaving. It should be noted that, the terminal only performs signal reconstruction on the decoded data blocks whose CRCs are 0. Then, the terminal subtracts the reconstructed signal from original data signals received by the terminal, where only original data signals corresponding to the third decoded data block and the fourth decoded data block whose CRCs are not 0 remain; performs a decoding preparation operation on the acquired original data signals corresponding to the third decoded data block and the fourth decoded data block, that is, performs LMMSE equalization, descrambling and despreading, inter-layer de-interleaving, and LLR operations (the inter-layer de-interleaving manner is described in Table 1.2), where the LMMSE equalization in the decoding preparation operation also uses $n \times 4$, which is the same as that in Embodiment 2, where n is determined according to a quantity of data streams actually existing in the received signal; and after all the foregoing operations are completed, decodes the data signals on which the decoding preparation operation is performed, to obtain the third decoded data block and the fourth decoded data block.

More specifically, there cases exist in continuing to perform CRC detection on the third decoded data block and the fourth decoded data block on which the SIC operation is executed for the first time:

a first case: if the CRCs of the third decoded data block and the fourth decoded data block on which the SIC operation is performed for the first time are both zero, it is determined that the two decoded data blocks are decoded correctly, and an SIC operation is no longer executed;

a second case: if neither of the CRCs of the third decoded data block and the fourth decoded data block on which the SIC operation is performed for the first time is zero, it is determined that the two decoded data blocks are decoded incorrectly, an SIC operation is no longer executed, and a retransmission indication is reported to the base station, so that the base station resends a downlink data signal; and

a third case: if the CRC of one of the third decoded data block and the fourth decoded data block on which the SIC operation is executed for the first time is not 0, herein assuming that the CRC of the third decoded data block is not zero, and the CRC of the fourth decoded data block is zero, executing an SIC operation on the third decoded data block for a second time includes: continuing to perform a signal reconstruction operation on the fourth decoded data block whose CRC is zero, that is, performing encoding, constellation mapping processing, inter-layer interleaving, spreading and scrambling, and precoding operations on the fourth decoded data block, to construct a reconstructed signal, and before the four decoded data blocks enter the input end of the interleaving module shown in FIG. 2, setting, by the terminal, a data stream of the third decoded data block whose CRC is not zero to 0, so that the terminal can perform corresponding inter-layer interleaving; then, subtracting the reconstructed signal from original data signals received by the terminal, where an original data signal corresponding to the third decoded data block whose CRC is not zero remains; performing a decoding preparation operation on the original data signal corresponding to the third decoded data block, that is, performing LMMSE equalization, descrambling and despreading, inter-layer de-interleaving, and LLR operations; and after all the foregoing operations are completed, decoding the data signal on which the decoding preparation operation is performed, to obtain the third decoded data block, and performing CRC detection on the decoded data block on which the SIC operation is executed for the second time. Herein, there are two cases: if the CRC of the third decoded data block on which the SIC operation is executed for the second time is 0, it is determined that the third decoded data block is decoded correctly, and an SIC operation is no longer executed; or if the CRC of the third decoded data block on which the SIC operation is executed for the second time is still not 0, that is, the CRC is the same as a CRC result, obtained through detection in the previous time, of the third decoded data block, it is determined that the third decoded data block is decoded incorrectly, an SIC operation is no longer executed, and a retransmission indication is reported to the base station, so that the base station resends a downlink data signal to the terminal

In the prior art, in a case in which the first decoded data block group and the second decoded data block group each include a decoded data block whose CRC is not 0, the terminal considers that none of CRCs of all decoded data blocks in the first decoded data block group and the second decoded data block group is 0, that is, all the decoded data blocks are decoded incorrectly, and the terminal no longer performs an SIC operation, but directly reports a retransmission indication to a base station, so that the base station re-delivers a data signal. However, in the present invention, a corresponding decoding operation is still performed on each decoded data block, to acquire correct downlink data, which improves a probability of correct decoding and lightens load of the base station.

In the method according to this embodiment, after CRC detection is performed on a decoded data block on which decoding is performed, an SIC operation is separately performed at least once on a decoded data block whose CRC is not 0, to ensure decoding accuracy, and only if none of CRCs of all decoded data blocks in a decoded data block group is 0, an indication of retransmitting downlink data is reported to a base station, thereby lightening load of the base station.

In Embodiment 6 of the present invention, on a basis of the foregoing embodiments, preferably, the separately performing CRC detection on each decoded data block, and determining, according to a CRC, obtained through detection, of each decoded data block, whether to execute a successive interference cancellation SIC operation, and if it is determined to execute an SIC operation, executing CRC detection again on the decoded data block on which an SIC operation is performed, until a same CRC result occurs or all CRCs are zero includes: separately performing CRC detection on each decoded data block, to acquire the CRC of each decoded data block; when it is identified that CRCs of decoded data blocks in one decoded data block group of the first decoded data block group and the second decoded data block group are all 0, and none of CRCs of the decoded data blocks in the other decoded data block group is 0, performing an SIC operation for a first time on the decoded data blocks whose CRCs are not 0; performing CRC detection on the decoded data blocks on which the SIC operation is executed for the first time; and if the CRCs of the decoded data blocks on which the SIC operation is executed for the first time are all 0, determining that the decoded data blocks are decoded correctly, and no longer executing an SIC operation; if none of the CRCs of the decoded data blocks on which the SIC operation is executed for the first time is 0, determining that the decoded data blocks are decoded incorrectly, no longer executing an SIC operation, and reporting a retransmission indication to the base station, so that the base station resends a downlink data signal; or if the CRC of one of the decoded data blocks on which the SIC operation is executed for the first time is not 0, executing an SIC operation for a second time on the decoded data block whose CRC is not 0; and if the CRC of the decoded data block on which the SIC operation is executed for the second time is 0, determining that the decoded data block is decoded correctly, and no longer executing an SIC operation; or if the CRC of the decoded data block on which the SIC operation is executed for the second time is not 0, determining that the decoded data block is decoded incorrectly, no longer executing an SIC operation, and reporting a retransmission indication to the base station, so that the base station resends a downlink data signal.

Specifically, the terminal detects, by using the CRC detection mechanism of the terminal, CRCs of the decoded data blocks in the first decoded data block group and the second decoded data block group, to acquire the CRC of each decoded data block, and determine whether the CRC of each decoded data block is 0; when it is identified that CRCs of decoded data blocks in one decoded data block group of the first decoded data block group and the second decoded data block group are all 0, and none of CRCs of the decoded data blocks in the other decoded data block group is 0, the terminal performs an SIC operation for a first time on the decoded data blocks whose CRCs are not 0. In this case, assuming that neither of the CRCs of the first decoded data block and the fourth decoded data block in the first decoded data block group is zero, and both CRCs of the second decoded data block and the third decoded data block in the second decoded data block group are zero, the terminal performs a signal reconstruction operation on the second decoded data block and the third decoded data block whose CRCs are zero, that is, performs encoding, constellation mapping processing, inter-layer interleaving, spreading and scrambling, precoding operations on the second decoded data block and the third decoded data block, to construct reconstructed signals (the inter-layer interleaving manner is described in Table 1.1), and before the four decoded data blocks enter the input end of the interleaving module shown in FIG. 2, the terminal further sets data streams of the first decoded data block and the fourth decoded data block to 0, so that the terminal can perform corresponding inter-layer interleaving. It should be noted that, the terminal only performs signal reconstruction on the decoded data blocks whose CRCs are 0. Then, the terminal subtracts the reconstructed signals of the second decoded data block and the third decoded data block from received original data signals, where only original data signals corresponding to the first decoded data block and the fourth decoded data block whose CRC is not 0 remain; performs a decoding preparation operation on the acquired original data signals corresponding to the first decoded data block and the fourth decoded data block, that is, performs LMMSE equalization, descrambling and despreading, inter-layer de-interleaving, and LLR operations (the inter-layer de-interleaving manner is described in Table 1.2), where the LMMSE equalization in the decoding preparation operation also uses $n \times 4$, which is the same as that in Embodiment 2, where n is determined according to a quantity of data streams actually existing in the received signal; and after all the foregoing operations are completed, decodes the data signals on which the decoding preparation operation is performed, to obtain the first decoded data block and the fourth decoded data block.

More specifically, there cases exist in continuing to perform CRC detection on the first decoded data block and the fourth decoded data block on which the SIC operation is executed for the first time:

a first case: if the CRCs of the first decoded data block and the fourth decoded data block on which the SIC operation is performed for the first time are both zero, it is determined that the two decoded data blocks are decoded correctly, and an SIC operation is no longer executed;
a second case: if neither of the CRCs of the first decoded data block and the fourth decoded data block on which the SIC operation is performed for the first time is zero, it is determined that the two decoded data blocks are decoded incorrectly, an SIC operation is no longer executed, and a retransmission indication is reported to the base station, so that the base station resends a downlink data signal; and
a third case: if the CRC of one of the first decoded data block and the fourth decoded data block on which the SIC operation is executed for the first time is not 0, herein assuming that the CRC of the first decoded data block is not zero, and the CRC of the fourth decoded data block is zero, executing an SIC operation on the first decoded data block for a second time includes: continuing, by a terminal, to perform a signal reconstruction operation on the fourth decoded data block whose CRC is zero, that is, performing encoding, constellation mapping processing, inter-layer interleaving, spreading and scrambling, and precoding operations on the fourth decoded data block, to construct a reconstructed signal, and before the four decoded data blocks enter the input end of the interleaving module shown in FIG. 2, setting, by the terminal, a data stream of the first decoded data block whose CRC is not zero to 0, so that the terminal can perform corresponding inter-layer interleaving; then, subtracting these reconstructed signals from original data signals received by the terminal, where an original data signal corresponding to the first decoded data block whose CRC is not zero remains; performing a decoding preparation operation on the original data signal corresponding to the first decoded data block, that is, performing LMMSE equalization, descrambling and despreading, inter-layer de-interleaving, and LLR operations; and after all the foregoing operations are completed, decoding the data signal on which the decoding preparation operation is performed, to obtain the first decoded data block, and performing CRC detection on the decoded data block on which the SIC operation is executed for the second time. Herein, there are two cases: if the CRC of the first decoded data block on which the SIC operation is executed for the second time is 0, it is determined that the first decoded data block is decoded correctly, and an SIC operation is no longer executed; or if the CRC of the first decoded data block on which the SIC operation is executed for the second time is still not 0, that is, the CRC is the same as a CRC result, obtained through detection in the previous time, of the first decoded data block, it is determined that the first decoded data block is decoded incorrectly, an SIC operation is no longer executed, and a retransmission indication is reported to the base station, so that the base station resends a downlink data signal to the terminal.

Further, in all the foregoing embodiments, the inter-layer interleaving manner is the interleaving manner in Table 1.1, and the inter-layer de-interleaving manner is the de-interleaving manner in Table 1.2. Herein, for example, inter-layer interleaving is performed in a case in which the first decoded data block group includes a decoded data block whose CRC is not zero and another decoded data block whose CRC is zero:

Before inter-layer interleaving, data of the first decoded data block and the fourth decoded data block is distributed as follows:

the first decoded data block: $d^{(0)}(0)\ d^{(0)}(1)\ d^{(0)}(2)\ d^{(0)}(3)\ d^{(0)}(4)\ d^{(0)}(5)$ ... and

the fourth decoded data block: $d^{(3)}(0)\ d^{(3)}(1)\ d^{(3)}(2)\ d^{(3)}(3)\ d^{(3)}(4)\ d^{(3)}(5)$ ...

After inter-layer interleaving is performed according to the manner in Table 1.1, data of the first decoded data block and the fourth decoded data block is distributed as follows:

| | | | | | | | |
|---|---|---|---|---|---|---|---|
| *Layer*1 | $d^{(3)}(0)$ | $d^{(0)}(1)$ | $d^{(3)}(2)$ | $d^{(0)}(3)$ | $d^{(3)}(4)$ | $d^{(0)}(5)$ | ... |
| *Layer*4 | $d^{(0)}(0)$ | $d^{(3)}(1)$ | $d^{(0)}(2)$ | $d^{(3)}(3)$ | $d^{(0)}(4)$ | $d^{(3)}(5)$ | ... |

Because inter-layer interleaving is used, the first decoded data block and the fourth decoded data block are distributed on a first layer and a fourth layer in an interleaved manner. In a transmission process, mutual interference, that is, inter-flow interference, is generated between the first layer and the fourth layer. If one decoded data block of the first decoded data block and the fourth decoded data block on which decoding is performed for a first time is decoded correctly, the terminal may subtract one decoded data block from the received signal. For example, if the first decoded data block is decoded correctly, the following signals may be obtained after the SIC operation is executed:

| | | | | | | | |
|---|---|---|---|---|---|---|---|
| *Layer*1 | $d^{(3)}(0)$ | 0 | $d^{(3)}(2)$ | 0 | $d^{(3)}(4)$ | 0 | ... |
| *Layer*4 | 0 | $d^{(3)}(1)$ | 0 | $d^{(3)}(3)$ | 0 | $d^{(3)}(5)$ | ... |

It can be known the foregoing results that: inter-flow interference brought by the first decoded data block is removed from the fourth decoded data block, thereby improving a probability of correct decoding.

If the inter-layer interleaving manner in Table 1.1 is not used, a signal on the layers is as follows:

| | | | | | | | |
|---|---|---|---|---|---|---|---|
| *Layer*1 | $d^{(0)}(0)$ | $d^{(3)}(0)$ | $d^{(0)}(2)$ | $d^{(3)}(2)$ | $d^{(0)}(4)$ | $d^{(3)}(4)$ | ... |
| *Layer*4 | $d^{(0)}(1)$ | $d^{(3)}(1)$ | $d^{(0)}(3)$ | $d^{(3)}(3)$ | $d^{(0)}(5)$ | $d^{(3)}(5)$ | ... |

If the first decoded data block is decoded correctly, a signal on which an SIC operation is executed is as follows:

| | | | | | | | |
|---|---|---|---|---|---|---|---|
| *Layer*1 | 0 | $d^{(3)}(0)$ | 0 | $d^{(3)}(2)$ | 0 | $d^{(3)}(4)$ | ... |
| *Layer*4 | 0 | $d^{(3)}(1)$ | 0 | $d^{(3)}(3)$ | 0 | $d^{(3)}(5)$ | ... |

In this case, inter-flow interference in the fourth decoded data block is brought by the fourth decoded data block itself, and therefore, cancellation of the first decoded data block cannot weaken the inter-flow interference in the fourth decoded data block. Therefore, when the inter-layer interleaving manner in Table 1.1 is used, inter-flow interference brought by a decoded data block itself is avoided.

In the prior art, after signal reconstruction is performed for a first time to acquire a decoded data block whose CRC is not 0, an SIC operation is performed once on the decoded data block. If the three cases in the present invention also exist after an SIC operation is performed for a first time on a first decoded data block and a fourth decoded data block whose CRC is not 0, a difference lies in that, in the prior art, a retransmission indication is reported to a base station both in a case in which both the CRCs of the two decoded data blocks on which the foregoing operation is performed are not 0 and in a case in which one of the CRCs of the two decoded data blocks on which the foregoing operation is performed is not 0, but in the present invention, a retransmission indication is reported to a base station only in a case in which neither of the CRCs of the two decoded data blocks on which the foregoing operation is performed is 0, and in a case in which the CRC of one decoded data block of the two decoded data blocks on which the SIC operation is performed for the first time is not zero, an SIC operation is performed for a second time on the decoded data block whose CRC is not zero, to improve a probability of correct decoding and lighten load of the base station.

In the method according to this embodiment of the present invention, after CRC check detection is performed on a decoded data block on which decoding is performed, an SIC operation is separately performed at least once on a decoded data block whose CRC is not 0, to ensure decoding accuracy, and only in a case in which none of CRCs of all decoded data blocks in a decoded data block group is 0, an indication of retransmitting downlink data is reported to a base station, thereby lightening load of the base station.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

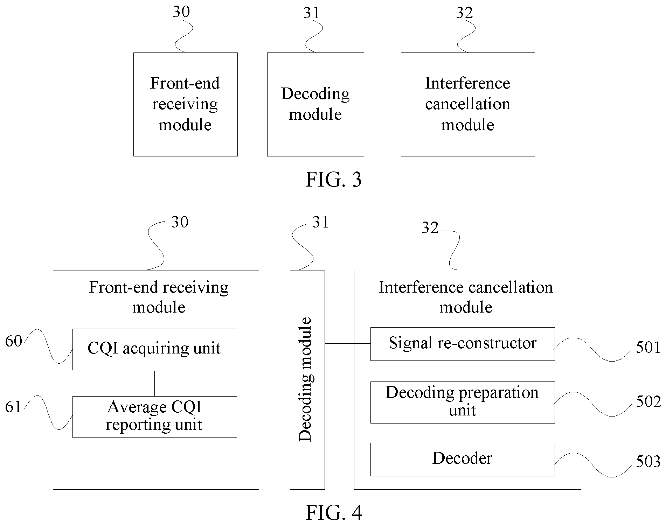

FIG. 3 is a schematic structural diagram of Embodiment 1 of a data receiving apparatus according to the present invention, and the apparatus may be integrated in a terminal. As shown in FIG. 3, the apparatus includes: a front-end receiving module 30, a decoding module 31, and an interference cancellation module 32, where the front-end receiving module 30 is configured to receive a data signal delivered by a base station, where the data signal includes at least two encoded data block groups, each encoded data block group includes at least one encoded data block, and encoded data blocks in each encoded data block group are transmitted in a binding manner; the decoding module 31 is configured to decode the data signal, and acquire decoded data blocks obtained by decoding the encoded data blocks, to form corresponding decoded data block groups; and the interference cancellation module 32 is configured to separately perform cyclic redundancy check CRC detection on each decoded data block, and determine, according to a CRC, obtained through detection, of each decoded data block, whether to execute a successive interference cancellation SIC operation, and if it is determined to execute an SIC operation, execute CRC detection again on the decoded data block on which an SIC operation is performed, until a same CRC result occurs or all CRCs are zero, where at least one of the determining to execute an SIC operation according to the CRC of each decoded data block includes: when CRCs of some decoded data blocks belonging to a decoded data block group are not zero, determining that the decoded data block is decoded incorrectly, and executing an SIC operation on the decoded data block.

The data receiving apparatus of this embodiment may execute the foregoing Embodiment 1 of the data receiving method, implementation principles and technical effects thereof are similar, and details are not described again herein.

FIG. 4 is a schematic structural diagram of Embodiment 2 of a data receiving apparatus according to the present invention, and on a basis of the embodiment shown in FIG. 3, the interference cancellation module 32 is specifically configured to: identify whether the CRC of each decoded data block is zero; and when it is identified that the CRCs of all the decoded data blocks are all zero, determine that the decoded data blocks are decoded correctly, and skip executing an SIC operation; or when it is identified that not all of the CRCs of the decoded data blocks are zero, identify whether a CRC result of each decoded data block is the same as a previous CRC result; and if yes, determine that the decoded data block is decoded incorrectly, skip executing an SIC operation, and report a retransmission indication to the base station, so that the base station resends a downlink data signal; or if no, determine that the decoded data block is decoded incorrectly, and execute an SIC operation.

The data receiving apparatus of this embodiment may execute the foregoing Embodiment 2 of the data receiving method, implementation principles and technical effects thereof are similar, and details are not described again herein.

Further, on a basis of the foregoing embodiment shown in FIG. 4, the interference cancellation module 32 includes: a signal re-constructor 501, configured to: when not all of the CRCs of the decoded data blocks are zero, separately perform a signal reconstruction operation on a decoded data block whose CRC is zero, to acquire a reconstructed signal of each decoded data block; and subtract the reconstructed signal of each decoded data block from the received data signal, to acquire an original data signal corresponding to a decoded data block whose CRC is not zero; a decoding preparation unit 502, configured to perform a decoding preparation operation on the acquired original data signal; and a decoder 503, configured to decode the data signal on which the decoding preparation operation is performed, to obtain a decoded data block, where the decoding preparation unit 502 is specifically configured to perform LMMSE equalization, descrambling and despreading, inter-layer de-interleaving, and a LLR calculation on the acquired original data signal.

The data receiving apparatus of this embodiment may execute the foregoing Embodiment 3 of the data receiving method, implementation principles and technical effects thereof are similar, and details are not described again herein.

Further, on a basis of the foregoing embodiment shown in FIG. 4, the front-end receiving module 30 may further include: a CQI acquiring unit 60, configured to: before the data signal delivered by the base station is received, separately acquire physical channel quality corresponding to each encoded data block group, to determine an average CQI of each encoded data block group; and an average CQI reporting unit 61, configured to report the average CQI to the base station, so that the base station determines, according to the average CQI, a size of the encoded data block of the delivered data signal.

The data receiving apparatus of this embodiment may execute the foregoing Embodiment 4 of the data receiving method, implementation principles and technical effects thereof are similar, and details are not described again herein.

**Claims**

1. A data receiving method, **characterized by** comprising:

receiving (S101) a data signal delivered by a base station, wherein the data signal comprises at least two encoded data block groups, each encoded data block group comprises multiple encoded data blocks, and encoded data blocks in each encoded data block group are transmitted in a binding manner according to which bit information on multiple encoded data blocks in each encoded data block group is transmitted together;

decoding (S102) the data signal, and acquiring decoded data blocks obtained by decoding the encoded data blocks, to form corresponding decoded data block groups; and

separately performing (S103) cyclic redundancy check, CRC, detection on each decoded data block, and determining, according to the CRC obtained through detection of each decoded data block, whether to execute a successive interference cancellation, SIC, operation, and if it is determined to execute an SIC operation, executing CRC detection again on the decoded data block on which an SIC operation is performed, until a same CRC result occurs or all CRCs are zero, wherein

at least one of the determining to execute an SIC operation according to the CRC of each decoded data block comprises: when CRCs of some decoded data blocks belonging to a decoded data block group are not zero, determining that the decoded data block is decoded incorrectly, and executing an SIC operation on the decoded data block.

2. The method according to claim 1, wherein the determining, according to a CRC, obtained through detection, of each decoded data block, whether to execute an SIC operation comprises:

identifying whether CRCs of all decoded data blocks are zero; and

when it is identified that the CRCs of all the decoded data blocks are all zero, determining that the decoded data blocks are decoded correctly, and skipping executing an SIC operation; or

when it is identified that not all of the CRCs of the decoded data blocks are zero, identifying whether a CRC result of each decoded data block is the same as a previous CRC result; and if the CRC result of each decoded data block is the same as the previous CRC result, determining that the decoded data block is decoded incorrectly, skipping executing an SIC operation, and reporting a retransmission indication to the base station, so that the base station resends a downlink data signal; or if the CRC result of each decoded data block is not the same as the previous CRC result, determining that the decoded data block is decoded incorrectly, and executing an SIC operation.

3. The method according to claim 2, wherein the when it is identified that the CRC result of each decoded data block is not the same as the previous CRC result, determining that the decoded data block is decoded incorrectly, and executing an SIC operation comprises:

when the CRC result of each decoded data block is not the same as the previous CRC result, separately performing a signal reconstruction operation on a decoded data block whose CRC is zero, to acquire a reconstructed signal of the decoded data block;

subtracting the reconstructed signal of the decoded data block from the received data signal, to acquire an original data signal corresponding to a decoded data block whose CRC is not zero;

performing a decoding preparation operation on the acquired original data signal; and

decoding the data signal on which the decoding preparation operation is performed, to obtain a decoded data block.

4. The method according to claim 3, wherein the performing a decoding preparation operation on the acquired original data signal comprises:

performing linear minimum mean square error, LMMSE, equalization, descrambling and despreading, inter-layer de-interleaving, and a log-likelihood ratio, LLR, calculation on the acquired original data signal.

5. The method according to claim 1, before the receiving a data signal delivered by a base station, further comprising:

separately acquiring physical channel quality corresponding to each encoded data block group, to determine an average channel quality indicator, CQI, of each encoded data block group; and

reporting the average CQI to the base station, so that the base station determines, according to the average CQI, a size of the encoded data block of the delivered data signal.

6. The method according to any one of claims 1 to 5, wherein if a quantity of the decoded data block groups is two, the decoding the data signal, and acquiring decoded data blocks comprises:

decoding the data signal, and acquiring a first decoded data block group and a second decoded data block group, wherein the first decoded data block group comprises: a first decoded data block and a fourth decoded data block, and the second decoded data block group comprises: a second decoded data block and a third decoded data block, wherein the first decoded data block and the fourth decoded data block are transmitted in a binding manner, and the second decoded data block and the third decoded data block are transmitted in a binding manner.

**7.** The method according to claim 6, wherein the separately performing CRC detection on each decoded data block, and determining, according to a CRC, obtained through detection, of each decoded data block, whether to execute a successive interference cancellation SIC operation, and if it is determined to execute an SIC operation, executing CRC detection again on the decoded data block on which an SIC operation is performed, until a same CRC result occurs or all CRCs are zero comprises:

separately performing CRC detection on each decoded data block, to acquire the CRC of each decoded data block;

when it is identified that the first decoded data block group and the second decoded data block group each comprise a decoded data block whose CRC is not 0, performing an SIC operation for a first time on the decoded data blocks whose CRCs are not 0 in the first decoded data block group and the second decoded data block group;

performing CRC detection on the decoded data blocks on which the SIC operation is executed for the first time; and

if the CRCs of the decoded data blocks whose CRCs are not 0 in the first decoded data block group and the second decoded data block group are both 0 after undergoing the SIC operation for the first time, determining that the decoded data blocks are decoded correctly, and no longer executing an SIC operation;

if neither of the CRCs of the decoded data blocks on which the SIC operation is executed for the first time is 0, determining that the decoded data blocks are decoded incorrectly, no longer executing an SIC operation, and reporting a retransmission indication to the base station, so that the base station resends a downlink data signal; or

if the CRC of one of the decoded data blocks on which the SIC operation is executed for the first time is not 0, determining that the decoded data block is decoded incorrectly, and executing an SIC operation for a second time on the decoded data block whose CRC is not 0;

performing CRC detection on the decoded data block on which the SIC operation is executed for the second time; and

if the CRC of the decoded data block on which the SIC operation is executed for the second time is 0, determining that the decoded data block is decoded correctly, and no longer executing an SIC operation; or

if the CRC of the decoded data block on which the SIC operation is executed for the second time is not 0, determining that the decoded data block is decoded incorrectly, no longer executing an SIC operation, and reporting a retransmission indication to the base station, so that the base station resends a downlink data signal.

**8.** The method according to claim 6, wherein the separately performing CRC detection on each decoded data block, and determining, according to a CRC, obtained through detection, of each decoded data block, whether to execute a successive interference cancellation SIC operation, and if it is determined to execute an SIC operation, executing CRC detection again on the decoded data block on which an SIC operation is performed, until a same CRC result occurs or all CRCs are zero comprises:

separately performing CRC detection on each decoded data block, to acquire the CRC of each decoded data block;

when it is identified that all CRCs of decoded data blocks in one decoded data block group of the first decoded data block group and the second decoded data block group are all 0, and none of CRCs of decoded data blocks in the other decoded data block group is 0, performing an SIC operation for a first time on the decoded data blocks whose CRCs are not 0;

performing CRC detection on the decoded data blocks on which the SIC operation is executed for the first time; and

if the CRCs of all the decoded data blocks on which the SIC operation is executed for the first time are all 0, determining that the decoded data blocks are decoded correctly, and no longer executing an SIC operation;

if none of the CRCs of the decoded data blocks on which the SIC operation is executed for the first time is 0, determining that the decoded data block is decoded incorrectly, no longer executing an SIC operation, and reporting a retransmission indication to the base station, so that the base station resends a downlink data signal; or

if the CRC of one of the decoded data blocks on which the SIC operation is executed for the first time is not 0, executing an SIC operation for a second time on the decoded data block whose CRC is not 0; and

if the CRC of the decoded data block on which the SIC operation is executed for the second time is 0, determining that the decoded data block is decoded correctly, and no longer executing an SIC operation; or

if the CRC of the decoded data block on which the SIC operation is executed for the second time is not 0, determining that the decoded data block is decoded incorrectly, no longer executing an SIC operation, and reporting a retransmission indication to the base station, so that the base station resends a downlink data signal.

9. A data receiving apparatus, **characterized by** comprising:

a front-end receiving module (30), configured to receive a data signal delivered by a base station, wherein the data signal comprises at least two encoded data block groups, each encoded data block group comprises multiple encoded data blocks, and encoded data blocks in each encoded data block group are transmitted in a binding manner according to which bit information on multiple encoded data blocks in each encoded data block group is transmitted together;

a decoding module (31), configured to decode the data signal, and acquire decoded data blocks obtained by decoding the encoded data blocks, to form corresponding decoded data block groups; and

an interference cancellation module (32), configured to: separately perform cyclic redundancy check, CRC, detection on each decoded data block, and determine, according to the CRC obtained through detection of each decoded data block, whether to execute a successive interference cancellation, SIC, operation, and if it is determined to execute an SIC operation, execute CRC detection again on the decoded data block on which an SIC operation is performed, until a same CRC result occurs or all CRCs are zero, wherein at least one of the determining to execute an SIC operation according to the CRC of each decoded data block comprises: when CRCs of some decoded data blocks belonging to a decoded data block group are not zero, determining that the decoded data block is decoded incorrectly, and executing an SIC operation on the decoded data block.

10. The apparatus according to claim 9, wherein the interference cancellation module is specifically configured to: identify whether the CRC of each decoded data block is zero; and when it is identified that the CRCs of all the decoded data blocks are all zero, determine that the decoded data blocks are decoded correctly, and skip executing an SIC operation; or when it is identified that not all of the CRCs of the decoded data blocks are zero, identify whether a CRC result of each decoded data block is the same as a previous CRC result; and if the CRC result of each decoded data block is the same as the previous CRC result, determine that the decoded data block is decoded incorrectly, skip executing an SIC operation, and report a retransmission indication to the base station, so that the base station resends a downlink data signal; or if the CRC result of each decoded data block is not the same as the previous CRC result, determine that the decoded data block is decoded incorrectly, and execute an SIC operation.

11. The apparatus according to claim 10, wherein the interference cancellation module comprises:

a signal re-constructor, configured to: when the CRC result of each decoded data block is not the same as the previous CRC result, separately perform a signal reconstruction operation on a decoded data block whose CRC is zero, to acquire a reconstructed signal of each decoded data block; and subtract the reconstructed signal of the decoded data block from the received data signal, to acquire an original data signal corresponding to a decoded data block whose CRC is not zero;

a decoding preparation unit, configured to perform a decoding preparation operation on the acquired original data signal; and

a decoder, configured to decode the data signal on which the decoding preparation operation is performed, to obtain a decoded data block.

12. The apparatus according to claim 11, wherein the decoding preparation unit is specifically configured to perform linear minimum mean square error, LMMSE, equalization, descrambling and despreading, inter-layer de-interleaving, and a log-likelihood ratio, LLR, calculation on the acquired original data signal.

13. The apparatus according to claim 9, wherein the front-end receiving module further comprises:

a channel quality indicator, CQI, acquiring unit, configured to: before the data signal delivered by the base station is received, separately acquire physical channel quality corresponding to each encoded data block group, to determine an average CQI of each encoded data block group; and

an average CQI reporting unit, configured to report the average CQI to the base station, so that the base station determines, according to the average CQI, a size of the encoded data block of the delivered data signal.

**14.** The apparatus according to any one of claims 9 to 13, wherein if a quantity of the decoded data block groups is two, the decoding module is specifically configured to: decode the data signal, and acquire a first decoded data block group and a second decoded data block group, wherein the first decoded data block group comprises: a first decoded data block and a fourth decoded data block, and the second decoded data block group comprises: a second decoded data block and a third decoded data block, wherein the first decoded data block and the fourth decoded data block are transmitted in a binding manner, and the second decoded data block and the third decoded data block are transmitted in a binding manner.

**Patentansprüche**

**1.** Datenempfangsverfahren, **dadurch gekennzeichnet, dass** es umfasst:

Empfangen (S101) eines von einer Basisstation gelieferten Datensignals, wobei das Datensignal mindestens zwei kodierte Datenblockgruppen umfasst, wobei jede kodierte Datenblockgruppe mehrere kodierte Datenblöcke umfasst, und kodierte Datenblöcke in jeder kodierten Datenblockgruppe in einer bindenden Weise übertragen werden, nach der Bit-Informationen auf mehreren kodierten Datenblöcken in jeder kodierten Datenblockgruppe zusammen übertragen werden;
Dekodieren (S102) des Datensignals und Erfassen von dekodierten Datenblöcken, die durch Dekodieren der kodierten Datenblöcke erhalten wurden, um entsprechende dekodierte Datenblockgruppen zu bilden; und separates Durchführen (S103) von zyklischer Redundanzprüfungs-, CRC, Detektierung an jedem dekodierten Datenblock, und Bestimmen gemäß CRC, die durch Detektierung jedes dekodierten Datenblocks erhalten wurde, ob eine folgende Interferenzauslöschungs-, SIC-Operation durchgeführt werden soll, und falls bestimmt wird, dass eine SIC-Operation ausgeführt werden soll, erneutes Ausführen von CRC-Detektierung an dem dekodierten Datenblock, an dem eine SIC-Operation durchgeführt wurde, bis dasselbe CRC-Ergebnis auftritt oder alle CRCs Null sind, wobei mindestens eines von dem Bestimmen zum Ausführen einer SIC-Operation gemäß der CRC jedes dekodierten Datenblocks umfasst: wenn CRCs von einigen dekodierten Datenblöcken, die zu einer dekodierten Datenblockgruppe gehören, nicht Null sind, Bestimmen, dass der dekodierte Datenblock nicht korrekt dekodiert wurde, und Ausführen einer SIC-Operation an dem dekodierten Datenblock.

**2.** Verfahren nach Anspruch 1, wobei das Bestimmen gemäß einer CRC, die mittels Detektierung erhalten wurde, von jedem dekodierten Datenblock, ob eine SIC-Operation ausgeführt werden soll, umfasst:

Identifizieren, ob CRCs aller dekodierter Datenblöcke Null sind; und
wenn identifiziert wird, dass die CRCs aller der dekodierten Datenblöcke alle Null sind, Bestimmen, dass die dekodierten Datenbköcke korrekt dekodiert sind, und Überspringen des Ausführens einer SIC-Operation; oder wenn identifiziert wird, dass nicht alle der CRCs der dekodierten Datenblöcke Null sind, Identifizieren, ob ein CRC-Ergebnis jedes dekodierten Datenblocks dasselbe wie ein vorhergehendes CRC-Ergebnis ist; und falls das CRC-Ergebnis jedes dekodierten Datenblocks dasselbe wie das vorhergehende CRC-Ergebnis ist, Bestimmen, dass der dekodierte Datenblock nicht korrekt dekodiert wurde, Überspringen der Ausführung einer SIC-Operation und Berichten einer Angabe zur erneuten Übertragung an die Basisstation, so dass die Basisstation erneut ein Downlink-Datensignal sendet; oder falls das CRC-Ergebnis jedes dekodierten Datenblocks nicht dasselbe wie das vorhergehende CRC-Ergebnis ist, Bestimmen, dass der dekodierte Datenblock nicht korrekt dekodiert wurde, und Ausführen einer SIC-Operation.

**3.** Verfahren nach Anspruch 2, wobei das Bestimmen, dass der dekodierte Datenblock nicht korrekt dekodiert wurde, und Ausführen einer SIC-Operation, wenn identifiziert wurde, dass das CRC-Ergebnis jedes dekodierten Datenblocks nicht dasselbe wie das vorhergehende CRC-Ergebnis ist, umfasst:

wenn das CRC-Ergebnis jedes dekodierten Datenblocks nicht dasselbe wie das vorhergehende CRC-Ergebnis ist, separates Durchführen einer Signalrekonstruktionsoperation an einem dekodierten Datenblock, dessen CRC Null ist, um ein rekonstruiertes Signal des dekodierten Datenblocks zu erfassen;
Subtrahieren des rekonstruierten Signals des dekodierten Datenblocks von dem empfangenen Datensignal, um ein Originaldatensignal zu erfassen, das einem dekodierten Datenblock entspricht, dessen CRC nicht Null ist;
Durchführen einer Dekodiervorbereitungsoperation an dem erfassten Originaldatensignal; und
Dekodieren des Datensignals, an dem die Dekodiervorbereitungsoperation durchgeführt wurde, um einen dekodierten Datenblock zu erhalten.

4. Verfahren nach Anspruch 3, wobei das Durchführen einer Dekodiervorbereitungsoperation an dem erfassten Originaldatensignal umfasst:
Durchführen von linearer minimaler mittlerer quadratischer Fehler-, LMMSE, Entzerrung, Descrambling und Entspreizen, Entschachtelung zwischen den Schichten und einer logarithmischen Wahrscheinlichkeitsverhältnis-, LLR, Berechnung an dem erfassten Originaldatensignal.

5. Verfahren nach Anspruch 1, das vor dem Empfangen eines von einer Basisstation gelieferten Datensignals ferner umfasst:

separates Erfassen der physikalischen Kanalqualität, die jeder kodierten Datenblockgruppe entspricht, um einen durchschnittlichen Kanalqualitätsindikator, CQI, von jeder kodierten Datenblockgruppe zu bestimmen; und Berichten des durchschnittlichen CQIs an die Basisstation, so dass die Basisstation gemäß dem durchschnittlichen CQI eine Größe des kodierten Datenblocks des gelieferten Datensignals bestimmt.

6. Verfahren nach einem der Ansprüche 1 bis 5, wobei, falls eine Menge der dekodierten Datenblockgruppen zwei ist, das Dekodieren des Datensignals und Erfassen von dekodierten Datenblöcken umfasst:
Dekodieren des Datensignals und Erfassen einer ersten dekodierten Datenblockgruppe und einer zweiten dekodierten Datenblockgruppe, wobei die erste dekodierte Datenblockgruppe umfasst: einen ersten dekodierten Datenblock und einen vierten dekodierten Datenblock, und die zweite dekodierte Datenblockgruppe umfasst: einen zweiten dekodierten Datenblock und einen dritten dekodierten Datenblock, wobei der erste dekodierte Datenblock und der vierte dekodierte Datenblock in einer bindenden Weise übertragen werden, und der zweite dekodierte Datenblock und der dritte dekodierte Datenblock in einer bindenden Weise übertragen werden.

7. Verfahren nach Anspruch 6, wobei das separate Durchführen von CRC-Detektierung an jedem dekodierten Datenblock, und Bestimmen gemäß einer CRC, die durch Detektierung jedes dekodierten Datenblocks erhalten wurde, ob eine folgende Interferenzauslöschungs-, SIC-Operation ausgeführt werden soll, und falls bestimmt wird, dass eine SIC-Operation durchgeführt werden soll, erneutes Ausführen von CRC-Detektierung an dem dekodierten Datenblock, an dem eine SIC-Operation durchgeführt wird, bis dasselbe CRC-Ergebnis auftritt oder alle CRCs Null sind, umfasst:

separates Durchführen von CRC-Detektierung an jedem dekodierten Datenblock, um die CRC jedes dekodierten Datenblocks zu erfassen;
wenn identifiziert wird, dass die erste dekodierte Datenblockgruppe und die zweite dekodierte Datenblockgruppe jeweils einen dekodierten Datenblock umfassen, dessen CRC nicht 0 ist, Durchführen einer erstmaligen SIC-Operation an den dekodierten Datenblöcken, deren CRCs nicht 0 sind, in der ersten dekodierten Datenblockgruppe und der zweiten dekodierten Datenblockgruppe;
Durchführen von CRC-Detektierung an den dekodierten Datenblöcken, an denen erstmalig die SIC-Operation durchgeführt wurde; und
falls die CRCs der dekodierten Datenblöcke, deren CRCs nicht 0 sind, in der ersten dekodierten Datenblockgruppe und der zweiten dekodierten Datenblockgruppe beide 0 sind, nachdem die erstmalige SIC-Operation durchlaufen wurde, Bestimmen, dass die dekodierten Datenblöcke korrekt dekodiert worden sind, und kein weiteres Ausführen einer SIC-Operation;
falls keiner der CRCs der dekodierten Datenblöcke, an denen erstmalig die SIC-Operation durchgeführt wurde, 0 ist, Bestimmen, dass die dekodierten Datenblöcke nicht korrekt dekodiert wurden, nicht länger Ausführen einer SIC-Operation, und Berichten einer Angabe zur erneuten Übertragung an die Basisstation, so dass die Basisstation erneut ein Downlink-Datensignal sendet; oder
falls die CRC von einem der dekodierten Datenblöcke, an dem erstmalig die SIC-Operation ausgeführt wurde, nicht 0 ist, Bestimmen, dass der dekodierte Datenblock nicht korrekt dekodiert wurde, und Ausführen einer zweitmaligen SIC-Operation an dem dekodierten Datenblock, dessen CRC nicht 0 ist;
Durchführen von CRC-Detektierung an dem dekodierten Datenblock, an dem zweitmalig die SIC-Operation durchgeführt wurde; und
falls die CRC des dekodierten Datenblocks, an dem zweitmalig die SIC-Operation durchgeführt wurde, 0 ist, Bestimmen, dass der dekodierte Datenblock korrekt dekodiert wurde, und nicht länger Ausführen einer SIC-Operation; oder
falls die CRC des dekodierten Datenblocks, an dem zweitmalig die SIC-Operation durchgeführt wurde, nicht 0 ist, Bestimmen, dass der dekodierte Datenblock nicht korrekt dekodiert wurden, nicht länger Ausführen einer SIC-Operation, und Berichten einer Angabe zur erneuten Übertragung an die Basisstation, so dass die Basisstation erneut ein Downlink-Datensignal sendet.

**8.** Verfahren nach Anspruch 6, wobei das separate Durchführen von CRC-Detektierung an jedem dekodierten Datenblock, und Bestimmen gemäß einer CRC, die durch Detektierung jedes dekodierten Datenblocks erhalten wurde, ob eine folgende Interferenzauslöschungs-, SIC-Operation ausgeführt werden soll, und falls bestimmt wird, dass eine SIC-Operation ausgeführt werden soll, erneutes Ausführen von CRC-Detektierung an dem dekodierten Datenblock, an dem eine SIC-Operation durchgeführt wurde, bis dasselbe CRC-Ergebnis auftritt oder alle CRCs Null sind, umfasst:

separates Durchführen von CRC-Detektierung an jedem dekodierten Datenblock, um die CRC jedes dekodierten Datenblocks zu erfassen;
wenn identifiziert wird, dass alle CRCs der dekodierten Datenblöcke in einer dekodierten Datenblockgruppe der ersten dekodierten Datenblockgruppe und der zweiten dekodierten Datenblockgruppe alle 0 sind und keine der CRCs der dekodierten Datenblöcke in der anderen dekodierten Datenblockgruppe 0 ist, Durchführen einer erstmaligen SIC-Operation an den dekodierten Datenblöcken, deren CRCs nicht 0 sind;
Durchführen von CRC-Detektierung an den dekodierten Datenblöcken, an denen erstmalig die SIC-Operation durchgeführt wurde; und
falls die CRCs aller der dekodierten Datenblöcke, an dem erstmalig die SIC-Operation durchgeführt wurde, alle 0 sind, Bestimmen, dass die dekodierten Datenblöcke korrekt dekodiert wurden, und nicht länger Ausführen einer SIC-Operation;
falls keiner der CRCs der dekodierten Datenblöcke, an denen erstmalig die SIC-Operation durchgeführt wurde, 0 ist, Bestimmen, dass der dekodierte Datenblock nicht korrekt dekodiert wurde, nicht länger Ausführen einer SIC-Operation, und Berichten einer Angabe zur erneuten Übertragung an die Basisstation, so dass die Basisstation erneut ein Downlink-Datensignal sendet; oder
falls die CRC von einem der dekodierten Datenblöcke, an dem erstmalig die SIC-Operation ausgeführt wurde, nicht 0 ist, Ausführen einer zweitmaligen SIC-Operation an dem dekodierten Datenblock, dessen CRC nicht 0 ist; und
falls die CRC des dekodierten Datenblocks, an dem zweitmalig die SIC-Operation durchgeführt wurde, 0 ist, Bestimmen, dass der dekodierte Datenblock korrekt dekodiert wurde, und nicht länger Ausführen einer SIC-Operation; oder
falls die CRC des dekodierten Datenblocks, an dem zweitmalig die SIC-Operation durchgeführt wurde, nicht 0 ist, Bestimmen, dass der dekodierte Datenblock nicht korrekt dekodiert wurden, nicht länger Ausführen einer SIC-Operation, und Berichten einer Angabe zur erneuten Übertragung an die Basisstation, so dass die Basisstation erneut ein Downlink-Datensignal sendet.

**9.** Datenempfangsvorrichtung, **dadurch gekennzeichnet, dass** sie umfasst:

ein Frontend-Empfangsmodul (30), das zum Empfangen eines Datensignals konfiguriert ist, das von einer Basisstation geliefert wird, wobei das Datensignal mindestens zwei kodierte Datenblockgruppen umfasst, jede kodierte Datenblockgruppe mehrere kodierte Datenblöcke umfasst, und kodierte Datenböcke in jeder kodierten Datenblockgruppe in einer bindenden Weise übertragen werden, nach der Bit-Informationen auf mehreren kodierten Datenblöcken in jeder kodierten Datenblockgruppe zusammen übertragen werden;
ein Dekodiermodul (31), das zum Dekodieren des Datensignals und Erfassen von dekodierten Datenblöcken konfiguriert ist, die durch Dekodieren der kodierten Datenblöcke erhalten wurden, um entsprechende dekodierte Datenblockgruppen zu bilden; und
ein Interferenzauslöschungsmodul (32), das konfiguriert ist zum: separaten Durchführen von zyklischer Redundanzprüfungs-, CRC, Detektierung an jedem dekodierten Datenblock, und Bestimmen gemäß der CRC, die durch Detektierung jedes dekodierten Datenblocks erhalten wurde, ob eine folgende Interferenzunterdrückungs-, SIC, Operation ausgeführt werden soll, und falls bestimmt wird, dass eine SIC-Operation ausgeführt werden soll, erneutes Ausführen der CRC-Detektierung an dem dekodierten Datenblock, an dem eine SIC-Operation durchgeführt wurde, bis dasselbe CRC-Ergebnis auftritt oder alle CRCs Null sind, wobei mindestens eines von dem Bestimmen zum Ausführen einer SIC-Operation gemäß der CRC jedes dekodierten Datenblocks umfasst: wenn die CRCs von einigen dekodierten Datenblöcken, die zu einer dekodierten Datenblockgruppe gehören, nicht Null sind, Bestimmen, dass der dekodierte Datenblock nicht korrekt dekodiert wurde, und Ausführen einer SIC-Operation an dem dekodierten Datenblock.

**10.** Vorrichtung nach Anspruch 9, wobei das Interferenzauslöschungsmodul speziell konfiguriert ist zum: Identifizieren, ob die CRC jedes dekodierten Datenblocks Null ist; und wenn identifiziert wird, dass die CRCs aller der dekodierten Datenblöcke alle Null sind, Bestimmen, dass die dekodierten Datenblöcke korrekt dekodiert wurden, und Überspringen des Ausführens einer SIC-Operation; oder wenn identifiziert wird, dass nicht alle der CRCs der dekodierten Datenblöcke Null sind, Identifizieren, ob ein CRC-Ergebnis jedes dekodierten Datenblocks dasselbe wie ein vorhergehendes CRC-Ergebnis ist; und falls das CRC-Ergebnis jedes dekodierten Datenblocks dasselbe wie das vorhergehende CRC-Ergebnis ist, Bestimmen, dass der dekodierte Datenblock nicht korrekt dekodiert wurde, Überspringen der Ausführung einer SIC-Operation und Berichten einer Angabe zur erneuten Übertragung an die Basisstation, so dass die Basisstation erneut ein Downlink-Datensignal sendet; oder falls das CRC-Ergebnis jedes dekodierten Datenblocks nicht dasselbe wie das vorhergehende CRC-Ergebnis ist, Bestimmen, dass der dekodierte Datenblock nicht korrekt dekodiert wurde, und Ausführen einer SIC-Operation.

**11.** Vorrichtung nach Anspruch 10, wobei das Interferenzauslöschungsmodul umfasst:

einen Signalrekonstruierer, der für folgendes konfiguriert ist: wenn das CRC-Ergebnis jedes dekodierten Datenblocks nicht dasselbe wie das vorhergehende CRC-Ergebnis ist, separates Durchführen einer Signalrekonstruktionsoperation an einem dekodierten Datenblock, dessen CRC Null ist, um ein rekonstruiertes Signal jedes dekodierten Datenblocks zu erfassen; und Subtrahieren des rekonstruierten Signals des dekodierten Datenblocks von dem empfangenen Datensignal, um ein Originaldatensignal zu erfassen, das einem dekodierten Datenblock entspricht, dessen CRC nicht Null ist;
eine Dekodiervorbereitungseinheit, die zum Durchführen einer Dekodiervorbereitungsoperation an dem erfassten Originaldatensignal konfiguriert ist; und
einen Dekodierer, der zum Dekodieren des Datensignals konfiguriert ist, an dem die Dekodiervorbereitungsoperation durchgeführt wurde, um einen dekodierten Datenblock zu erhalten.

**12.** Vorrichtung nach Anspruch 11, wobei die Dekodiervorbereitungseinheit speziell zum Durchführen von linearer minimaler mittlerer quadratischer Fehler-, LMMSE, Entzerrung, Descrambling und Entspreizen, Entschachtelung zwischen den Schichten und einer logarithmischen Wahrscheinlichkeitsverhältnis-, LLR, Berechnung an dem erfassten Originadatensignal konfiguriert ist.

**13.** Vorrichtung nach Anspruch 9, wobei das Frontend-Empfangsmodul ferner umfasst:

eine Kanalqualitätsindikator-, CQI, Erfassungseinheit, die für folgendes konfiguriert ist: bevor das von der Basisstation gelieferte Datensignal empfangen wird, separates Erfassen von physikalischer Kanalqualität entsprechend jeder kodierten Datenblockgruppe, um einen durchschnittlichen CQI jeder kodierten Datenblockgruppe zu bestimmen; und
eine durchschnittliche CQI-Berichtseinheit, die zum Berichten des durchschnittlichen CQIs an die Basisstation konfiguriert ist, so dass die Basisstation gemäß dem durchschnittlichen CQI eine Größe des kodierten Datenblocks des gelieferten Datensignals bestimmt.

**14.** Vorrichtung nach einem der Ansprüche 9 bis 13, wobei, falls eine Menge der dekodierten Datenblockgruppen zwei ist, das Dekodiermodul speziell konfiguriert ist zum: Dekodieren des Datensignals und Erfassen einer ersten dekodierten Datenblockgruppe und einer zweiten dekodierten Datenblockgruppe, wobei die erste dekodierte Datenblockgruppe umfasst: einen ersten dekodierten Datenblock und einen vierten dekodierten Datenblock, und die zweite dekodierte Datenblockgruppe umfasst: einen zweiten dekodierten Datenblock und einen dritten dekodierten Datenblock, wobei der erste dekodierte Datenblock und der vierte dekodierte Datenblock in einer bindenden Weise übertragen werden, und der zweite dekodierte Datenblock und der dritte dekodierte Datenblock in einer bindenden Weise übertragen werden.

**Revendications**

**1.** Procédé de réception de données, **caractérisé en ce qu'**il consiste à :

recevoir (S101) un signal de données délivré par une station de base, le signal de données comprenant au moins deux groupes de blocs de données codées, chaque groupe de blocs de données codées comprend de multiples blocs de données codées, et des blocs de données codées dans chaque groupe de blocs de données codées sont transmis dans un mode de liaison en fonction duquel des informations binaires sur de multiples blocs de données codées dans chaque groupe de blocs de données codées sont transmises conjointement ;
décoder (S102) le signal de données, et acquérir des blocs de données décodées obtenus en décodant les blocs de données codées, pour former des groupes de blocs de données décodées correspondants ; et
exécuter (S103) séparément une détection de contrôle de redondance cyclique, CRC, sur chaque bloc de données décodées, et déterminer, en fonction du CRC obtenu par le biais de la détection de chaque bloc de données décodées, s'il faut exécuter ou non une opération d'annulation successive d'interférences, SIC, et si on détermine d'exécuter une opération SIC, exécuter une détection CRC de nouveau sur le bloc de données décodées sur lequel une opération SIC est exécutée, jusqu'à ce qu'un même résultat CRC se produise ou que tous les CRC soient à zéro, dans lequel

au moins une de la détermination d'exécuter une opération SIC en fonction du CRC de chaque bloc de données décodées comprend : lorsque des CRC de certains blocs de données décodées appartenant à un groupe de blocs de données décodées ne sont pas à zéro, déterminer que le bloc de données décodées est décodé de manière incorrecte, et exécuter une opération SIC sur le bloc de données décodées.

2. Procédé selon la revendication 1, dans lequel la détermination, en fonction d'un CRC, obtenu par le biais d'une détection, de chaque bloc de données décodées, s'il faut exécuter ou non une opération SIC, consiste à :

identifier si des CRC de tous les blocs de données décodées sont à zéro ; et
lorsqu'on identifie que les CRC de tous les blocs de données décodées sont tous à zéro, déterminer que les blocs de données décodées sont décodés correctement, et sauter l'exécution d'une opération SIC ; ou lorsqu'on identifie que les CRC des blocs de données décodées ne sont pas tous à zéro, identifier si un résultat CRC de chaque bloc de données décodées est le même qu'un résultat CRC précédent ; et si le résultat CRC de chaque bloc de données décodées est le même que le résultat CRC précédent, déterminer que le bloc de données décodées est décodé de manière incorrecte, sauter l'exécution d'une opération SIC, et rapporter une indication de retransmission à la station de base, de sorte que la station de base envoie de nouveau un signal de données de liaison descendante ; ou si le résultat CRC de chaque bloc de données décodées n'est pas le même que le résultat CRC précédent, déterminer que le bloc de données décodées est décodé de manière incorrecte, et exécuter une opération SIC.

3. Procédé selon la revendication 2, dans lequel le moment où on identifie que le résultat CRC de chaque bloc de données décodées n'est pas le même que le résultat CRC précédent, déterminer que le bloc de données décodées est décodé de manière incorrecte, et exécuter une opération SIC, consistant à :

lorsque le résultat CRC de chaque bloc de données décodées n'est pas le même que le résultat CRC précédent, exécuter séparément une opération de reconstruction de signal sur un bloc de données décodées dont le CRC est à zéro, pour acquérir un signal reconstruit du bloc de données décodées ;
soustraire le signal reconstruit du bloc de données décodées à partir du signal de données reçu, pour acquérir un signal de données original correspondant à un bloc de données décodées dont le CRC n'est pas à zéro ;
exécuter une opération de préparation de décodage sur le signal de données original acquis ; et
décoder le signal de données sur lequel l'opération de préparation de décodage est effectuée, pour obtenir un bloc de données décodées.

4. Procédé selon la revendication 3, dans lequel l'exécution d'une opération de préparation de décodage sur le signal de données original acquis consiste à :
exécuter une égalisation d'une erreur quadratique moyenne minimum linéaire, LMMSE, un désembrouillage et un désétalement, un désentrelacement entre des couches et un calcul d'un rapport de probabilité logarithmique, LLR, sur le signal de données original acquis.

5. Procédé selon la revendication 1, avant la réception d'un signal de données délivré par une station de base, consistant en outre à :

acquérir séparément une qualité de canal physique correspondant à chaque groupe de blocs de données codées, pour déterminer un indicateur de qualité de canal moyen, CQI, de chaque groupe de blocs de données codées ; et
rapporter le CQI moyen à la station de base, de sorte que la station de base détermine, en fonction du CQI moyen, une taille du bloc de données codées du signal de données délivré.

6. Procédé selon l'une quelconque des revendications 1 à 5, dans lequel si une quantité des groupes de blocs de données décodées est deux, le décodage du signal de données, et l'acquisition de blocs de données décodées, consiste à :
décoder le signal de données, et acquérir un premier groupe de blocs de données décodées et un second groupe de blocs de données décodées, dans lequel le premier groupe de blocs de données décodées comprend : un premier bloc de données décodées et un quatrième bloc de données décodées, et le second groupe de blocs de données décodées comprend : un deuxième bloc de données décodées et un troisième bloc de données décodées, le premier bloc de données décodées et le quatrième bloc de données décodées étant transmis dans un mode de liaison, et le deuxième bloc de données décodées et le troisième bloc de données décodées sont transmis dans un mode de liaison.

**7.** Procédé selon la revendication 6, dans lequel l'exécution séparément d'une détection CRC sur chaque bloc de données décodées, et la détermination, en fonction d'un CRC, obtenu par le biais d'une détection, de chaque bloc de données décodées, s'il faut exécuter ou non une opération d'annulation successive d'interférences, SIC, et si on détermine d'exécuter une opération SIC, exécuter une détection CRC de nouveau sur le bloc de données décodées sur lequel une opération SIC est exécutée, jusqu'à ce qu'un même résultat CRC se produise ou que tous les CRC soient à zéro, consiste à :

exécuter séparément une détection CRC sur chaque bloc de données décodées, pour acquérir le CRC de chaque bloc de données décodées ;
lorsqu'on a identifié que le premier groupe de blocs de données décodées et le second groupe de blocs de données décodées comprennent chacun un bloc de données décodées dont le CRC n'est pas 0, exécuter une opération SIC une première fois sur les blocs de données décodées dont les CRC ne sont pas 0 dans le premier groupe de blocs de données décodées et le second groupe de blocs de données décodées ;
exécuter une détection CRC sur les blocs de données décodées sur lesquels l'opération SIC est exécutée pour la première fois ; et
si les CRC des blocs de données décodées dont les CRC ne sont pas 0 dans le premier groupe de blocs de données décodées et le second groupe de blocs de données décodées sont tous les deux 0 après avoir subi l'opération SIC pour la première fois, déterminer que les blocs de données décodées sont décodés correctement, et ne plus exécuter d'opération SIC ;
si aucun des CRC des blocs de données décodées sur lesquels l'opération SIC est exécutée pour la première fois n'est 0, déterminer que les blocs de données décodées sont décodés de manière incorrecte, ne plus exécuter d'opération SIC, et rapporter une indication de retransmission à la station de base, de sorte que la station de base envoie de nouveau un signal de données de liaison descendante ; ou
si le CRC d'un des blocs de données décodées sur lequel l'opération SIC est exécutée pour la première fois n'est pas 0, déterminer que le bloc de données décodées est décodé de manière incorrecte, et exécuter une opération SIC une deuxième fois sur le bloc de données décodées dont le CRC n'est pas 0 ;
exécuter une détection CRC sur le bloc de données décodées sur lequel l'opération SIC est exécutée pour la deuxième fois ; et
si le CRC du bloc de données décodées sur lequel l'opération SIC est exécutée pour la deuxième fois est 0, déterminer que le bloc de données décodées est décodé correctement, et ne plus exécuter d'opération SIC ; ou
si le CRC du bloc de données décodées sur lequel l'opération SIC est exécutée pour la deuxième fois n'est pas 0, déterminer que le bloc de données décodées est décodé de manière incorrecte, ne plus exécuter d'opération SIC, et rapporter une indication de retransmission à la station de base, de sorte que la station de base envoie de nouveau le signal de données de liaison descendante.

**8.** Procédé selon la revendication 6, dans lequel l'exécution séparément d'une détection CRC sur chaque bloc de données décodées, et la détermination, en fonction d'un CRC, obtenu par le biais d'une détection, de chaque bloc de données décodées, s'il faut exécuter ou non une opération d'annulation successive d'interférences, SIC, et si on détermine d'exécuter une opération SIC, exécuter une détection CRC de nouveau sur le bloc de données décodées sur lequel une opération SIC est exécutée, jusqu'à ce qu'un même résultat CRC se produise ou que tous les CRC soient à zéro, consiste à :

exécuter séparément une détection CRC sur chaque bloc de données décodées, pour acquérir le CRC de chaque bloc de données décodées ;
lorsqu'on a identifié que tous les CRC des blocs de données décodées dans un groupe de blocs de données décodées du premier groupe de blocs de données décodées et du second groupe de blocs de données décodées sont tous 0, et qu'aucun des CRC des blocs de données décodées dans l'autre groupe de blocs de données décodées n'est 0, exécuter une opération SIC une première fois sur les blocs de données décodées dont les CRC ne sont pas 0 ;
exécuter une détection CRC sur les blocs de données décodées sur lesquels l'opération SIC est exécutée pour la première fois ; et
si les CRC de tous les blocs de données décodées sur lesquels l'opération SIC est exécutée pour la première fois sont tous 0, déterminer que les blocs de données décodées sont décodés correctement, et ne plus exécuter d'opération SIC ;

si aucun des CRC des blocs de données décodées sur lesquels l'opération SIC est exécutée pour la première fois n'est 0, déterminer que le bloc de données décodées est décodé de manière incorrecte, et ne plus exécuter d'opération SIC, et rapporter une indication de retransmission à la station de base, de sorte que la station de base envoie de nouveau un signal de données de liaison descendante ; ou

si le CRC d'un des blocs de données décodées sur lesquels l'opération SIC est exécutée pour la première fois n'est pas 0, exécuter une opération SIC une deuxième fois sur le bloc de données décodées dont le CRC n'est pas 0 ; et

si le CRC du bloc de données décodées sur lequel l'opération SIC est exécutée pour la deuxième fois est 0, déterminer que le bloc de données décodées est décodé correctement, et ne plus exécuter d'opération SIC ; ou si le CRC du bloc de données décodées sur lequel l'opération SIC est exécutée pour la deuxième fois n'est pas 0, déterminer que le bloc de données décodées est décodé de manière incorrecte, ne plus exécuter d'opération SIC, et rapporter une indication de retransmission à la station de base, de sorte que la station de base envoie de nouveau un signal de données de liaison descendante.

9. Appareil de réception de données, **caractérisé en ce qu'**il comprend :

un module de réception d'extrémité avant (30), conçu pour recevoir un signal de données délivré par une station de base, dans lequel le signal de données comprend au moins deux groupes de blocs de données codées, chaque groupe de blocs de données codées comprend de multiples blocs de données codées, et des blocs de données codées dans chaque groupe de blocs de données codées sont transmis dans un mode de liaison en fonction duquel des informations binaires sur de multiples blocs de données codées dans chaque groupe de blocs de données codées sont transmises conjointement ;

un module de décodage (31), conçu pour décoder le signal de données, et acquérir des blocs de données décodées obtenus en décodant les blocs de données codées, pour former des groupes de blocs de données décodées correspondants ; et

un module d'annulation d'interférence (32), conçu pour : exécuter séparément une détection de contrôle de redondance cyclique, CRC, sur chaque bloc de données décodées, et déterminer, en fonction du CRC obtenu par le biais de la détection de chaque bloc de données décodées, s'il faut exécuter ou non une opération d'annulation successive d'interférences, SIC, et si on détermine d'exécuter une opération SIC, exécuter une détection CRC de nouveau sur le bloc de données décodées sur lequel une opération SIC est exécutée, jusqu'à ce qu'un même résultat CRC se produise ou que tous les CRC soient à zéro, dans lequel au moins une de la détermination d'exécuter une opération SIC en fonction du CRC de chaque bloc de données décodées comprend : lorsque des CRC de certains blocs de données décodées appartenant à un groupe de blocs de données décodées ne sont pas à zéro, déterminer que le bloc de données décodées est décodé de manière incorrecte, et exécuter une opération SIC sur le bloc de données décodées.

10. Appareil selon la revendication 9, dans lequel le module d'annulation d'interférence est conçu spécifiquement pour : identifier si le CRC de chaque bloc de données décodées est à zéro ; et lorsqu'on identifie que les CRC de tous les blocs de données décodées sont tous à zéro, déterminer que les blocs de données décodées sont décodés correctement, et sauter l'exécution d'une opération SIC ; ou lorsqu'on identifie que les CRC des blocs de données décodées ne sont pas tous à zéro, identifier si un résultat CRC de chaque bloc de données décodées est le même qu'un résultat CRC précédent ; et si le résultat CRC de chaque bloc de données décodées est le même que le résultat CRC précédent, déterminer que le bloc de données décodées est décodé de manière incorrecte, sauter l'exécution d'une opération SIC, et rapporter une indication de retransmission à la station de base, de sorte que la station de base envoie de nouveau un signal de données de liaison descendante ; ou si le résultat CRC de chaque bloc de données décodées n'est pas le même que le résultat CRC précédent, déterminer que le bloc de données décodées est décodé de manière incorrecte, et exécuter une opération SIC.

11. Appareil selon la revendication 10, dans lequel le module d'annulation d'interférence comprend :

un reconstructeur de signal, conçu pour : lorsque le résultat CRC de chaque bloc de données décodées n'est pas le même que le résultat CRC précédent, exécuter séparément une opération de reconstruction de signal sur un bloc de données décodées dont le CRC est à zéro, pour acquérir un signal reconstruit de chaque bloc de données décodées ; et soustraire le signal reconstruit du bloc de données décodées à partir du signal de données reçu, pour acquérir un signal de données original correspondant à un bloc de données décodées dont le CRC n'est pas à zéro ;

une unité de préparation de décodage, conçue pour exécuter une opération de préparation de décodage sur le signal de données original acquis ; et

un décodeur, conçu pour décoder le signal de données sur lequel l'opération de préparation de décodage est effectuée, pour obtenir un bloc de données décodées.

**12.** Appareil selon la revendication 11, dans lequel l'unité de préparation de décodage est conçue spécifiquement pour exécuter une égalisation d'une erreur quadratique moyenne minimum linéaire, LMMSE, un désembrouillage et un désétalement, un désentrelacement entre des couches et un calcul d'un rapport de probabilité logarithmique, LLR, sur le signal de données original acquis.

**13.** Appareil selon la revendication 9, dans lequel le module de réception d'extrémité avant comprend en outre :

une unité d'acquisition d'un indicateur de qualité de canal, CQI, conçue pour : avant que le signal de données délivré par la station de base ne soit reçu, acquérir séparément une qualité de canal physique correspondant à chaque groupe de blocs de données codées, pour déterminer un CQI moyen de chaque groupe de blocs de données codées ; et

une unité de rapport de CQI moyen, conçue pour rapporter le CQI moyen à la station de base, de sorte que la station de base détermine, en fonction du CQI moyen, une taille du bloc de données codées du signal de données délivré.

**14.** Appareil selon l'une quelconque des revendications 9 à 13, dans lequel si une quantité des groupes de blocs de données décodées est deux, le module de décodage est conçu spécifiquement pour : décoder le signal de données, et acquérir un premier groupe de blocs de données décodées et un second groupe de blocs de données décodées, dans lequel le premier groupe de blocs de données décodées comprend : un premier bloc de données décodées et un quatrième bloc de données décodées, et le second groupe de blocs de données décodées comprend : un deuxième bloc de données décodées et un troisième bloc de données décodées, le premier bloc de données décodées et le quatrième bloc de données décodées étant transmis dans un mode de liaison, et le deuxième bloc de données décodées et le troisième bloc de données décodées sont transmis dans un mode de liaison.

Receive a data signal delivered by a base station, where the data signal includes at least two encoded data block groups, each encoded data block group includes at least one encoded data block, and encoded data blocks in each encoded data block group are transmitted in a binding manner ⟋ S101

Decode the data signal, and acquire decoded data blocks obtained by decoding the encoded data blocks, to form corresponding decoded data block groups ⟋ S102

Separately perform CRC detection on each decoded data block, and determine, according to a CRC, obtained through detection, of each decoded data block, whether to execute an SIC operation, and if it is determined to execute an SIC operation, execute CRC detection again on the decoded data block on which an SIC operation is performed, until a repeated CRC result occurs or all CRCs are zero, where at least one of the determining to execute an SIC operation according to the CRC of each decoded data block includes: when CRCs of some decoded data blocks belonging to a decoded data block group are not zero, determining that the decoded data block is decoded incorrectly, and executing an SIC operation on the decoded data block ⟋ S103

FIG. 1

FIG. 2

30

Front-end
receiving
module

31

Decoding
module

32

Interference
cancellation
module

FIG. 3

30

Front-end receiving
module

60

CQI acquiring unit

61

Average CQI
reporting unit

31

Decoding module

32

Interference cancellation
module

Signal re-constructor

501

Decoding preparation
unit

502

Decoder

503

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011128326 A1
- US 2011268019 A1
- US 2011075753 A1
- CN 101277165 A